# EUROPÄISCHE PATENTSCHRIFT

(11) **EP 3 856 568 B1**
(45) Veröffentlichungstag und Bekanntmachung des Hinweises auf die Patenterteilung: **16.11.2022**
(21) Anmeldenummer: 20733352.7
(22) Anmeldetag: 29.05.2020
(51) Int. Cl.: B60M 1/34

(54) **DEHNVERBINDER FÜR EINE SCHLEIFLEITUNG UND SCHLEIFLEITUNG**
EXTENSIBLE CONNECTOR FOR A CONTACT LINE, AND CONTACT LINE
RACCORD DE DILATATION POUR UNE LIGNE DE CONTACT ET LIGNE DE CONTACT

(30) Priorität: 29.05.2019 DE 102019114553
(43) Veröffentlichungstag der Anmeldung: 04.08.2021
(73) Patentinhaber: Conductix-Wampfler GmbH, 79576 Weil am Rhein (DE)
(72) Erfinder: BUCHCZYK, Peter, 79576 Weil am Rhein (DE); FRÜH, Manuel, 79588 Efringen-Kirchen (DE)
(74) Vertreter: Charrier Rapp & Liebau
(86) Internationale Anmeldenummer: PCT/EP2020/065026
(87) Internationale Veröffentlichungsnummer: WO 2020/240000

(56) Entgegenhaltungen:
- EP-A1- 2 862 244
- DE-A1- 3 719 214
- FR-A5- 2 122 810

## Beschreibung

Die Erfindung betrifft einen Dehnverbinder zur Verbindung von Leitersträngen einer Schleifleitung nach dem Oberbegriff des Anspruchs 1 sowie eine Schleifleitung nach dem Oberbegriff des Anspruchs 16.

Aus der EP 0 938 168 A2 ist ein Verbinder für zwei aufeinanderfolgende Schleifleitungsteilstücke, die aus in Kunststofflängsprofilen angeordneten Stromschienen gebildet sind und in denen ein Stromabnehmerwagen verfahrbar ist, wobei die zu verbindenden Enden der Kunststofflängsprofile zueinander fluchtend angeordnet sind, bekannt. Um einen Verbinder für zwei aufeinanderfolgende Schleifleitungsteilstücke zu schaffen, bei dem es trotz der unterschiedlichen thermischen Ausdehnungskoeffizienten von Metall und Kunststoff, insbesondere PVC, zu keinen Verwerfungen und Verformungen kommt, ist bei einem Verbinder, der als Verbindungsmuffe ausgebildet ist, welche die in einem vorbestimmten Bereich in Längsrichtung frei verschiebbaren Enden der Kunststofflängsprofile formschlüssig umfasst, die Verbindungsmuffe quer zu ihrer Längsrichtung geteilt und besteht aus zwei lösbar miteinander verbindbaren Kunststoffhälften, wobei jede Kunststoffhälfte vor dem Verbinden der Schleifleitungsteilstücke auf das jeweils zugehörige Ende aufschiebbar ist. Dabei ist diese Lösung baulich aufwendig und platzraubend, da sie die Schleifleitungsstücke umgreift. Aufgabe der Erfindung ist es deshalb, einen Dehnverbinder zur Verbindung von zwei Stromschienen einer Schleifleitung bereitzustellen, der einfach und schnell montierbar sowie möglichst kompakt ist, und eine sichere elektrische Verbindung zwischen zwei aufeinanderfolgenden Stromschienen bei gleichzeitigem Längsausgleich der Stromschienen zulässt.

Die US 4705480 A betrifft eine elektrische Verbindungsvorrichtung besteht aus einem Schiebesystem, das mindestens einen leitenden Stift umfasst, der an einer festen Stromschiene befestigt ist, und mindestens einen zugehörigen steckbaren Verbinder, der an einer anderen festen Stromschiene befestigt ist, wobei das Schiebesystem zugleich eine elektrische Verbindung zwischen den Stangen auf beiden Seiten einer Dehnungsfuge zwischen den Stromschienen bereitstellt. Dabei ist das Schiebesystem in Längsrichtung seitlich der Stangen befestigt und baut hierdurch sehr groß.

Die EP 2 862 244 A0 offenbart ein Verbindungselement zum Verbinden von zwei Stromschienen einer Schleifleitung, mit einem länglichen Grundkörper mit einander in seiner Längsrichtung gegenüberliegenden Einsteckenden zum Einstecken in Längshohlräume der Stromschienen, eine solche Schleifleitung und ein Verfahren zum Verbinden von zwei Stromschienen einer solchen Schleifleitung. Das Verbindungselement löst die Aufgabe, ein Verbindungselement bereitzustellen, das einfach und kostengünstig herstellbar ist, leicht vor Ort montiert werden kann und ein schnelles und einfaches Verbinden von Leitersträngen einer Schleifleitung ermöglicht, durch ein Verbindungselement, bei dem der Grundkörper auf mindestens einer seiner Längsseiten Verbindungsvertiefungen zum Vercrimpen mit mindestens einer Seitenwandung der Stromschienen aufweist.

Die DE 37 19 214 A1 offenbart betrifft eine elektrisch leitende Verbindung zwischen aneinanderstoßenden Einzelabschnitten von Stromschienen. Diese wird mit einem Stromübergangskabel, bestehend aus Litze und Kontaktschuhen, hergestellt. Um jedoch das Stromübergangskabel innerhalb der Querschnittskontur der Stromschienen unterbringen zu können, sind die Kabelschuhe jeweils in Form eines zylindrischen oder prismatischen Steckerstiftes ausgebildet, der in eine formentsprechende Ausnehmung innerhalb der Stromschiene einsteckbar ist. Derartige Ausnehmungen sind meist ohnehin an den Stromschienen vorhanden, nachdem diese als Hohlprofil im Strangpreßverfahren hergestellt sind. Die Steckerstifte sind zweckmäßigerweise hohl ausgebildet und nehmen in ihrem Innern die Litze auf, die sie lediglich lose umschließen. Dadurch kann sich die Litze bei Längsbewegung der Steckerstifte stauchungsbedingt aufweiten.

Die FR 2 122 810 offenbart eine Stromabnahmeleitung für ein Fahrzeug, das entlang einer auf dem Erdboden verlaufenden Bahn geführt wird, die mindestens eine Leiterschiene aufweist, die parallel zu der auf dem Erdboden verlaufenden Bahn angeordnet ist und aus einer Mehrzahl profilierter Elemente besteht, die in Längsrichtung ausgerichtet und mittels Verbindungsschienen durch Dehnungsverbindungsstellen miteinander verbunden sind, wobei die profilierten Elemente und die Verbindungsschienen für eine bewegliche Stromabnahmevorrichtung eine Gleitkontaktfläche bilden, die sich entlang der Leiterschiene erstreckt, Dabei sind die die zusammenwirkenden Enden der profilierten Elemente und der Verbindungsschienen so gestaltet, dass die Gleitkontaktflächen der Verbindungsschienen und der profilierten Elemente sich an Verbindungsstellen vereinigen, die durch Verringerung der veränderlichen Länge mindestens eines Teiles der Enden unterbrochen werden.

Die DE 26 06 609 B1 offenbart einen Dehnverbinder für Stromschienen, bei dem an einem der zu verbindenden Stromschienenenden ein in Längsrichtung der Stromschienen verlaufender Laschenteil angeordnet ist, der mit einem Langloch verschiebbar in einer dem anderen Stromschienenende zugeordneten und dort fest angebrachten Gabellasche geführt ist, wobei die elektrische Verbindung über zusätzliche, außerhalb des Stromschienenstranges liegende, flexible Leitungen erfolgt. Auch dies benötigt viel Bauraum und zusätzlich Montageschritte, um die mechanisch und elektrische Verbindung herzustellen.

Die Erfindung löst diese Aufgabe durch einen Dehnverbinder mit den Merkmalen des Anspruchs 1 sowie eine Schleifleitung mit den Merkmalen des Anspruchs 16. Vorteilhafte Ausgestaltungen und zweckmäßige Weiterbildungen der Erfindung sind in den abhängigen Ansprüchen angegeben.

Ein eingangs genannter Dehnverbinder ist erfindungsgemäß dadurch gekennzeichnet, dass der Dehnverbinder ein Buchsenteil mit einer in Längsrichtung verlaufenden Verbindungsöffnung und ein Steckerteil mit einem in Längsrichtung verlaufenden Verbindungsstecker aufweist, wobei der Verbindungsstecker zur Herstellung einer elektrischen Verbindung in Längsrichtung in die Verbindungsöffnung einsteckbar ist.

Bevorzugt kann ein elektrischer Kontakt des Verbindungssteckers in Längsrichtung in einem Abstand von einem Verbindungsbereich des Steckerteils angeordnet sein, der größer als der vorgegebene maximale Dehnspalt zwischen Steckerteil und Buchsenteil in Längsrichtung ist. In einem nicht-beanspruchten Beispiel kann der Abstand bei in montiertem Zustand des Steckerteils vollständig in die zweite Stromschiene eingestecktem Verbindungsbereich des Steckerteils bestimmt werden. Es kann in der Verbindungsöffnung ein weiterer elektrischer Kontakt angeordnet sein, der im Bereich des offenen Endes der Verbindungsöffnung angeordnet sein kann. Es kann die Verbindungsöffnung länger sein als der Verbindungsstecker.

In einer vorteilhaften Weiterbildung kann der Dehnverbinder ein Sicherungselement aufweisen, welches das Buchsenteil und das Steckerteil bis zu einem vorgegebenen maximalen Dehnspalt in Längsrichtung beweglich miteinander verbindet.

Weiter kann vorteilhaft am Steckerteil eine in Längsrichtung verlaufende Längsausnehmung vorgesehen sein, wobei mindestens ein Gleitanschlag des Sicherungselements in die Längsausnehmung eingreift. Bevorzugt kann alternativ oder zusätzlich am Buchsenteil eine in Längsrichtung verlaufende weitere Längsausnehmung vorgesehen sein, wobei ein weiterer Gleitanschlag des Sicherungselements in die weitere Längsausnehmung eingreift. In nicht-beanspruchten Beispielen kann das Sicherungselement lösbar in eine Sicherungsöffnung des Steckerteils oder des Buchsenteils eingreifen. Es kann die Sicherungsöffnung eine Vertiefung in einer der Verbindungsstelle zwischen Buchsenteil und Steckerteil in Längsrichtung abgewandten Stirnseite des Buchsenteils oder Steckerteils sein.

In einer günstigen Ausgestaltung kann der Gleitanschlag bei vorgegebenem maximalem Dehnspalt zwischen Steckerteil und Buchsenteil an einem vorderen, der Verbindungsstelle zwischen Buchsenteil und Steckerteil zugewandten Sicherungsanschlag der Längsausnehmung anschlagen. Weiter kann in einem nicht-beanspruchten Beispiel der Gleitanschlag bei minimalem Dehnspalt zwischen Steckerteil und Buchsenteil nicht an einem hinteren, der Verbindungsstelle zwischen Buchsenteil und Steckerteil abgewandten Ende der Längsausnehmung anschlagen. Bevorzugt kann der Dehnverbinder zumindest auf der Seite des Sicherungselements eine Abdeckung vorsehen, welche den Gleitanschlag in der Längsausnehmung hält.

In einem nicht-beanspruchten Beispiele kann das Steckerteil und/oder das Buchsenteil an ihrem der Verbindungsstelle zwischen Steckerteil und Buchsenteil abgewandten Ende eine in Längsrichtung verlaufende, außermittig angeordnete Befestigungslasche aufweisen.

In einem nicht-beanspruchten Beispiel können die Stromschienen jeweils einen in Längsrichtung verlaufenden Innenraum aufweisen.

Bevorzugt kann im Buchsenteil eine in Längsrichtung verlaufende, mit der Verbindungsöffnung in Verbindung stehende Längsausnehmung vorgesehen sein, in die im montierten Zustand ein am Verbindungsstecker angeordneter Gleitanschlag eingreift. Dabei kann die Längsausnehmung vorteilhaft einen in Längsrichtung dem Eingang der Verbindungsöffnung näheren vorderen Sicherungsanschlag für den Gleitanschlag ausbilden. Weiter kann vorteilhaft die Längsausnehmung ein Langloch sein, das von der Verbindungsöffnung quer zur Längsrichtung vollständig durch das Buchsenteil nach außen durchreicht. In einem nicht-beanspruchten Beispiel kann der Dehnverbinder so ausgebildet sein, dass der Gleitanschlag bei vollständig in die Verbindungsöffnung eingeschobenem Verbindungsstecker nicht an einem dem Eingang der Verbindungsöffnung in Längsrichtung ferneren hinterem Ende der Längsausnehmung anschlägt. Bevorzugt kann der Gleitanschlag an einem Sicherungsabschnitt des Verbindungssteckers befestigbar sein.

In einer weiteren Ausgestaltung kann der Dehnverbinder ein weiteres Buchsenteil mit einer in Längsrichtung verlaufenden weiteren Verbindungsöffnung und das Steckerteil einen in Längsrichtung dem Verbindungsstecker gegenüberliegenden weiteren Verbindungsstecker aufweisen, wobei der weitere Verbindungsstecker zur Herstellung einer elektrischen Verbindung in Längsrichtung in die weitere Verbindungsöffnung einsteckbar ist. Dabei kann vorteilhaft das Steckerteil ein zwischen den beiden Verbindungssteckern angeordnetes Mittelteil mit Anschlägen für die stirnseitigen Enden der Buchsenteile aufweisen. Bevorzugt kann zwischen elektrischen Kontakten der beiden Verbindungsstecker des Steckerteils mindestens ein Distanzstück angeordnet sein, wobei bevorzugt zwei Distanzstücke vorgesehen sein können, welche durch das Mittelteil von einander getrennt sind.

Weiter kann in den Buchsenteilen jeweils eine in Längsrichtung verlaufende, mit der jeweiligen Verbindungsöffnung in Verbindung stehende Längsausnehmung vorgesehen sein, in die im montierten Zustand ein am jeweiligen Verbindungsstecker angeordneter Gleitanschlag eingreift. Bevorzugt können die Längsausnehmungen jeweils einen in Längsrichtung dem Eingang der jeweiligen Verbindungsöffnungen näheren vorderen Sicherungsanschlag für den jeweiligen Gleitanschlag ausbilden. Dabei können die Längsausnehmungen Langlöcher sein, die von der jeweiligen Verbindungsöffnung quer zur Längsrichtung vollständig durch das jeweilige Buchsenteil nach außen durchreichen. Hierdurch sind die Gleitanschläge einfach von außen zugänglich. In einem nicht-beanspruchten Beispiel können die Gleitanschläge bei vollständig in die jeweilige Verbindungsöffnung eingeschobenem Verbindungsstecker nicht an einem dem Eingang der jeweiligen Verbindungsöffnung in Längsrichtung ferneren hinterem Ende der Längsausnehmung anschlagen. Weiter können die Gleitanschläge vorteilhaft an einem Sicherungsabschnitt des jeweiligen Verbindungssteckers befestigbar sein, insbesondere auf aufklippsbar sein, um die Montage zu vereinfachen und ggf. eine einfache Austauschbarkeit zu ermöglichen. Ggf. Können die Gleitanschläge aber auch vorteilhaft in anderer Weise am Verbindungsstecker befestig werden, beispielsweise eingeschraubt werden.

In einer alternativen Ausgestaltung kann in den Buchsenteilen jeweils eine in Längsrichtung verlaufende Längsausnehmung vorgesehen sein, in welche Gleitanschläge mindestens eines länglichen Sicherungselements eingreifen. Dabei können zwei Sicherungselemente vorgesehen sein, welche jeweils einen der Gleitanschläge aufweisen, und in Längsrichtung näher am Steckerteil jeweils ein Halteende zur Befestigung an dem Steckerteil oder einer am Steckerteil befestigbaren Halterung. Bevorzugt können die Gleitanschläge gegenüber dem Halteende des jeweiligen Sicherungselements quer zur Längsrichtung abgewinkelt sein, wobei der Winkel zwischen Halteende und Gleitanschlag bei Drehung um die Längsrichtung vorteilhaft bis zu 90° und besonders vorteilhaft bis zu 80° betragen kann. Weiter kann die Halterung zur Befestigung der Sicherungselemente jeweils in Längsrichtung verlaufende Haltenuten für einen in Längsrichtung verlaufenden Teil der Sicherungselemente und jeweils in Richtung der abgewinkelten Halteenden verlaufende weitere Haltenuten aufweisen. Weiter kann die Halterung bevorzugt mindestens eine Rastaufnahme zur Befestigung an dem Steckerteil aufweist.

Eine eingangs genannte Schleifleitung ist erfindungsgemäß dadurch gekennzeichnet, dass zur Verbindung der ersten Stromschiene und der zweiten Stromschiene ein oben und nachfolgend beschriebener und in den Ansprüchen angegebener Dehnverbinder vorgesehen ist. Vorteilhaft können sich an den Schleifabschnitt Seitenwandungen anschließen, welche einen Innenraum umgeben. Dabei kann bevorzugt das Steckerteil in den Innenraum der zweiten Stromschiene eingesteckt und/oder elektrisch leitend mit der zweiten Stromschiene verbunden sein. In einem nicht-beanspruchten Beispiel kann ein durch eine Befestigungsöffnung des Steckerteils und eine mit dieser fluchtenden Durchgangsöffnung der zweiten Stromschiene reichendes Befestigungselement das Steckerteil und die zweite Stromschiene miteinander verbinden. Dabei kann das Buchsenteil bevorzugt in den Innenraum der ersten Stromschiene eingesteckt und/oder elektrisch leitend mit der ersten Stromschiene verbunden sein.

In einem nicht-beanspruchten Beispiel kann ein durch eine Befestigungsöffnung des Buchsenteils und eine mit dieser fluchtenden Durchgangsöffnung der ersten Stromschiene reichendes Befestigungselement das Buchsenteil und die erste Stromschiene miteinander verbinden. Dabei können die erste Stromschiene und die zweite Stromschiene auf ihrer dem Schleifabschnitt abgewandten Seite einen in Längsrichtung verlaufenden Längsschlitz aufweisen, auf den die Sicherungsöffnung des Buchsenteils und/oder die Längsausnehmung des Steckerteils ausgerichtet sind.

Bevorzugt kann in einer montagetechnisch günstigen Ausführung der Längsschlitz zumindest im Bereich des Sicherungselements des Dehnverbinders ganz oder zum Teil von einer Abdeckung bedeckt sein. Dabei kann die Abdeckung durch ein elektrisch isolierendes Isolierprofil gebildet sein, welches die erste Stromschiene und zweite Stromschiene zumindest im Bereich des Sicherungselements umgibt.

Bei der oben und nachfolgend beschriebenen Ausführung des Dehnverbinders mit des Steckerteils mit zwei Verbindungssteckern und zwei entsprechenden zugeordneten Buchsenteilen können die Buchsenteile vorteilhaft in den Innenraum der jeweiligen Stromschiene eingesteckt und/oder elektrisch leitend mit der jeweiligen Stromschiene verbunden sein. Dabei können beispielhaft durch Befestigungsöffnungen der Buchsenteile und mit jenen fluchtenden Durchgangsöffnungen der Stromschienen reichende Befestigungselemente die Buchsenteile mit der jeweiligen Stromschiene miteinander verbinden. Weiter können bei dieser Ausführung des Dehnverbinders die erste Stromschiene und die zweite Stromschiene auf ihrer dem Schleifabschnitt abgewandten Seite einen in Längsrichtung verlaufenden Längsschlitz aufweisen, auf den die Langlöcher bzw. Längsausnehmungen der Buchsenteile ausgerichtet sind. Bevorzugt kann dabei der Längsschlitz zumindest im Bereich der Langlöcher bzw. Längsausnehmungen der Buchsenteile bzw. des oder der länglichen Sicherungselemente des Dehnverbinders ganz oder zum Teil von einer Abdeckung bedeckt sein. Bevorzugt kann die Abdeckung durch ein elektrisch isolierendes Isolierprofil gebildet sein, welches die erste Stromschiene und zweite Stromschiene zumindest im Bereich der Langlöcher, der Längsausnehmungen bzw. der Sicherungselemente umgibt.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine schematische dreidimensionale Explosionsansicht eines erfindungsgemäßen Dehnverbinders sowie zweier Leiterstränge einer erfindungsgemäßen Schleifleitung;
- **Fig. 2**: die Vorderansicht auf die Explosionsansicht der Schleifleitung aus Fig. 1;
- **Fig. 3**: die Draufsicht auf die Schleifleitung aus Fig. 2;
- **Fig. 4**: die Unteransicht auf die Schleifleitung aus Fig. 2;
- **Fig. 5**: eine teilweise aufgeschnittene Seitenansicht einer mit dem Dehnverbinder verbundenen Schleifleitung;
- **Fig. 6**: die Seitenansicht auf die Schleifleitung aus Fig. 5;
- **Fig. 7**: eine Stirnseitenansicht auf die Schleifleitung aus Fig. 6 von links;
- **Fig. 8**: die Draufsicht auf die Schleifleitung aus Fig. 5;
- **Fig. 9**: die Unteransicht auf die Schleifleitung aus Fig. 5
- **Fig. 10**: eine schematische dreidimensionale Explosionsansicht eines weiteren erfindungsgemäßen Dehnverbinders und einer weiteren erfindungsgemäßen Schleifleitung;
- **Fig. 11**: eine schematische dreidimensionale Explosionsansicht noch eines weiteren erfindungsgemäßen Dehnverbinders und einer weiteren erfindungsgemäßen Schleifleitung.

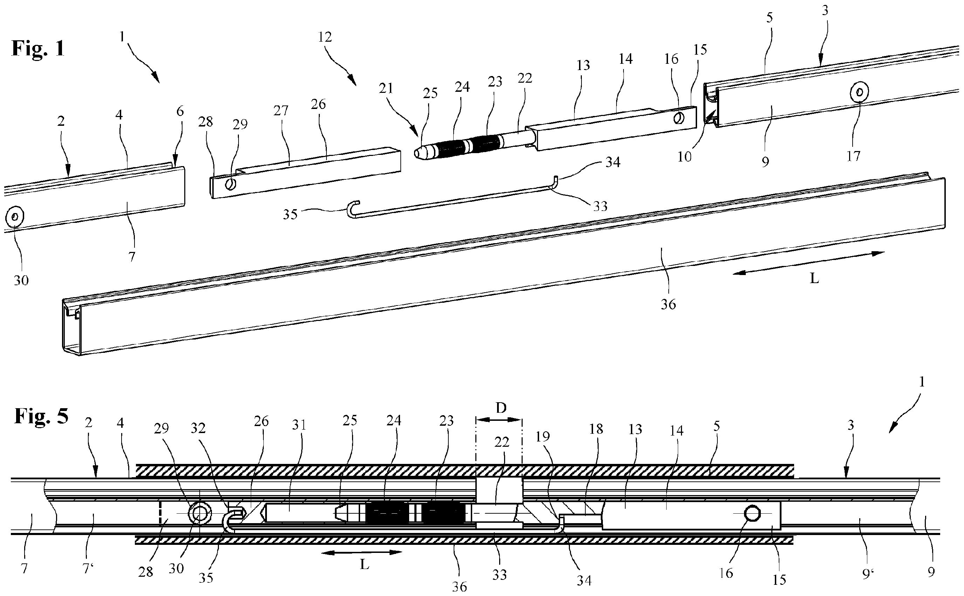

Fig. 1 zeigt einen Abschnitt einer in eine Längsrichtung L verlaufenden Schleifleitung 1, welche aufgrund ihrer Länge aus einer Vielzahl sich aneinander anschließender Leiterstränge zusammengesetzt ist. Fig. 1 zeigt die Schleifleitung 1 an einer Verbindungsstelle zwischen einem ersten Leiterstrang 2 und einem zweiten Leiterstrang 3.

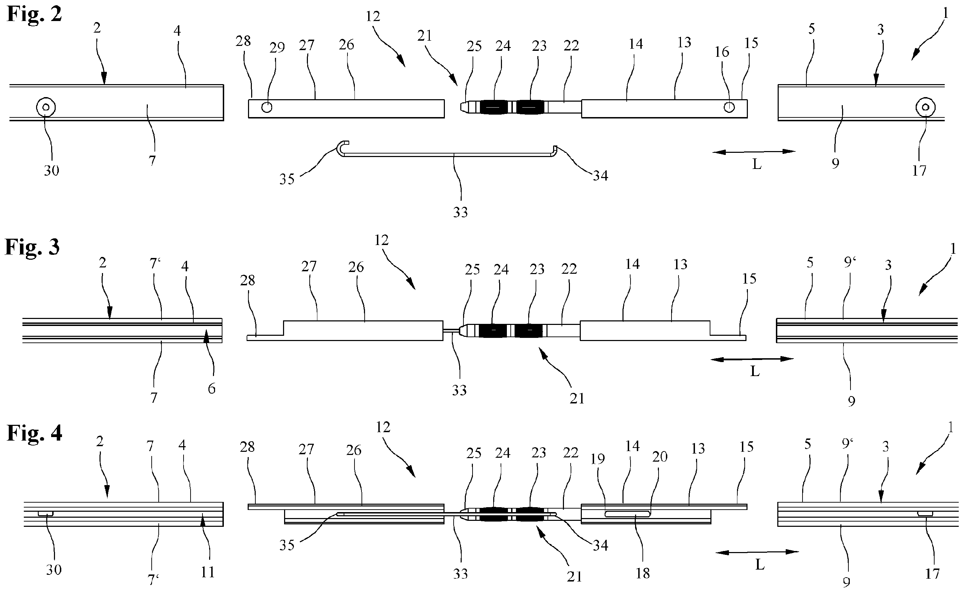

Die Leiterstränge 2, 3 umfassen in an sich bekannter Weise eine erste Stromschiene 4 bzw. zweite Stromschiene 5 aus einem, bevorzugt relativ weichen, elektrisch gut leitenden Material, insbesondere Metall wie z.B. Aluminium oder Kupfer. Es können aber auch andere elektrisch leitende Materialien verwendet werden. Da die Leiterstränge 2, 3 und die Stromschienen 4, 5 weitgehend identisch ausgebildet sind, wird die Erfindung, sofern möglich und sinnvoll, im weiteren anhand der in Fig. 1 linken ersten Stromschiene 4 erläutert. Entsprechende Angaben gelten auch für die in Fig. 2 rechte zweite Stromschiene 5.

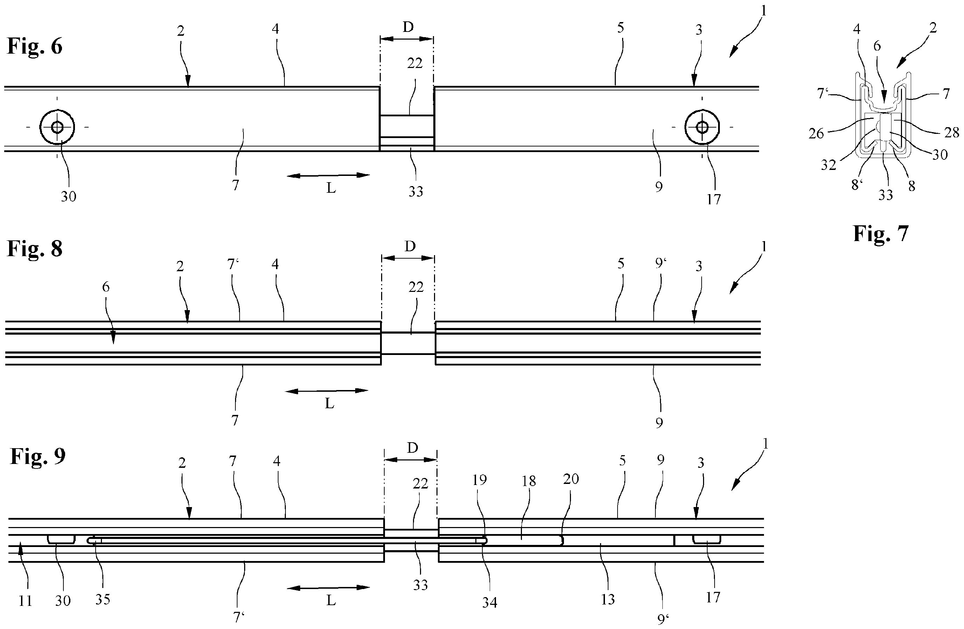

Die Schleifleitung 1 dient in an sich bekannter Weise zur Versorgung eines in ihrer Längsrichtung L daran verfahrbar oder beweglich angeordneten elektrischen Verbrauchers mit elektrischer Energie. Hierzu weist der Verbraucher einen Stromabnehmer mit mindestens einem Schleifstück auf, das in den Stromschienen 4, 5 in einem in Fig. 1 und 7 gut erkennbaren trogförmigen Schleifabschnitt 6 entlang gleitet und die elektrische Verbindung zwischen Verbraucher und Schleifleitung 1 herstellt. Die Ausgestaltungen des Verbrauchers, des Stromabnehmers und des Schleifstücks sind hinlänglich bekannt, so dass auf eine zeichnerische Darstellung verzichtet wurde.

Das Schleifstück des Stromabnehmers kann von in Fig. 1 und 7 oben in den trogförmigen Schleifabschnitt 6 eingesetzt werden und darin an der Stromschiene 4 entlangleiten. An den trogförmigen Schleifabschnitt 6 schließen sich Seitenwandungen 7, 7' an, die in Einsetzrichtung des Schleifkontakts, also in Fig. 7 nach unten, U-förmig über den Boden des trogförmigen Schleifabschnitts 6 hinausreichen. An ihren freien Enden weisen die Seitenwandungen 7, 7' nach innen bzw. aufeinander zu und zum trogförmigen Schleifabschnitt 6 hin gebogene Schenkelenden 8, 8' auf, also in etwa in Form der Ziffer "1" V-förmig nach innen und zum Schleifabschnitt 6 hin. Hierdurch wird zwischen dem trogförmigen Schleifabschnitt 6, den Seitenwandungen 7, 7' und den Schenkelenden 8, 8' ein in Längsrichtung L verlaufender Stromschieneninnenraum 10 mit einem zwischen den Schenkelenden 8, 8' in Längsrichtung L der Schleifleitung 1 verlaufenden Längsschlitz 11 gebildet. Die zweite Stromschiene 5 weist einen entsprechenden Aufbau mit Seitenwandungen 9, 9' auf.

Die Stromschienen 4, 5 sind jeweils von einem in Fig. 1 und 7 dargestellten und in Fig. 5 zum Teil dargestellten Isolierprofil 36 aus elektrisch isolierendem Material, insbesondere Kunststoff, umgeben. Das Isolierprofil 36 lässt dabei den Schleifabschnitt 6 für den Schleifkontakt frei.

Um den ersten Leiterstrang 2 mit dem zweiten Leiterstrang 3 und die Stromschienen 4 und 5 miteinander so zu verbinden, dass bei vor allem temperaturabhängigen unterschiedlichen Längsausdehnungen der beiden Stromschienen 4, 5 eine sichere elektrische Verbindung mit Längenausgleich ermöglicht wird, wird ein Dehnverbinder 12 verwendet. Der Dehnverbinder 12 weist zunächst ein aus einem elektrisch leitenden Material, bevorzugt Metall, gebildetes Steckerteil 13 auf. Das Steckerteil 13 weist einen als Einsteckbereich 14 ausgebildeten Verbindungsbereich mit einer im Querschnitt an den Stromschieneninnenraum 10 angepasste Außenkontur auf, um das Steckerteil 13 in den Stromschieneninnenraum 10 einstecken zu können. Vorliegend weist das Steckerteil 13 auf seiner dem trogförmigen Schleifabschnitt 6 abgewandten Unterseite also einen keiltrogförmigen Querschnitt mit einem flachen Boden und sich daran anschließenden, in die Schenkelenden 8, 8' eingreifenden, dreiecksförmigen Randstegen auf.

Zur mechanischen und elektrischen Befestigung des Steckerteils 13 an der in Figur 1 rechten, zweiten Stromschiene 5 ist an dem der Stromschiene 5 und dem Stromschieneninnenraum 10 zugewandten Ende des Einsteckbereichs 14 eine Befestigungslasche 15 mit einer Befestigungsöffnung 16 vorgesehen. Zur Montage wird das Steckerteil 13 mit dem Einsteckbereich 14 voraus stirnseitig in den Stromschieneninnenraum 10 eingeschoben, bis die Befestigungsöffnung 16 mit einer in der Seitenwandung 7 der Stromschiene 5 eingebrachten, nicht näher bezeichneten Durchgangsöffnung fluchtet. Anschließend wird ein Blindniet 17 durch die Durchgangsöffnung der Seitenwandung 7 und die Befestigungsöffnung 16 gesteckt und anschließend in an sich bekannter Weise mit einer Blindnietzange vernietet. Hierdurch kann das Steckerteil 13 sowohl mechanisch als auch elektrisch fest mit der Stromschiene 5 verbunden werden.

Dabei besteht der Blindniet 17 bevorzugt aus elektrisch leitendem Material, sodass das Steckerteil 13 sowohl über den Blindniet 17 als auch durch die flächige Anlage an der Seitenwandung 7 mechanisch wie auch elektrisch leitend mit der Stromschiene 5 verbunden ist. Bevorzugt sind die Befestigungsöffnung 16 und die Durchgangsöffnung so angeordnet, dass der Einsteckbereich 14 bei eingestecktem Steckerteil 13 mit der Stirnseite der Stromschiene 5 bündig abschließt.

Der Einsteckbereich 14 weist weiter auf seiner in Fig. 1 nach unten weisenden, dem trogförmigen Schleifabschnitt 6 abgewandten Unterseite eine in Längsrichtung L verlaufende Längsnut 18 auf, wie besonders in Fig. 4, 5 und 9 gut erkennbar. Die Längsnut 18 liegt dabei im Bereich des Längsschlitzes 11 und ist somit vom Längsschlitz 11 aus von außen zugänglich. Weiter reicht die Längsnut 18 nicht ganz über die Hälfte der Höhe des Steckerteils 13, könnte aber auch höher sein oder ggf. auch als vollständig durch das Steckerteil 13 reichendes Langloch ausgebildet sein. Weiter weist die Längsnut 18 an ihrem der Befestigungslasche 15 bzw. dem einsteckseitigen Ende des Steckerteils 13 fernen Ende einen in Fig. 5 gut erkennbaren vorderen Sicherungsanschlag 19 und anderenends ein nur in Fig. 4 und Fig. 9 erkennbares hinteres Ende 20 auf. Zumindest der Sicherungsanschlag 19, ggf. auch das hintere Ende 20 weisen bevorzugt senkrecht zur Längsrichtung L zum Boden der Längsnut 18 hin verlaufende Anschlagsflächen auf.

An seinem dem Einsteckbereich 14 abgewandten, aus der Stromschiene 5 herausstehenden Ende weist das Steckerteil 13 einen im Querschnitt im Wesentlichen kreisrund ausgebildeten Verbindungsstecker 21 auf. Dabei schließt sich an das den Einsteckbereich 14 zunächst ein Distanzstück 22 an, und daran dann in Längsrichtung L versetzt, identisch ausgebildete elektrische Kontakte, bevorzugt sogenannte Lamellenkontakte 23, 24, welche ähnlich wie die Kontaktbereiche eines Federkorbsteckers ausgebildet sind. An dem dem Einsteckbereich 14 abgewandten Ende weist der Verbindungsstecker 21 eine kegelförmige Steckerspitze 25 auf welche das Einstecken des Verbindungssteckers 21 erleichtert. Anstelle von Lamellenkontakten können auch andere Kontakte verwendet werden, z.B. Drahtfederkontakte.

Weiter sieht der Dehnverbinder 12 als Gegenstück zum Steckerteil 13 ein Buchsenteil 26 vor, welches wiederum eine an den Stromschieneninnenraum 10 angepasste Außenkontur aufweist. Um das Buchsenteil 26 sowohl elektrisch als auch mechanisch an der Stromschiene 4 zu befestigen, weist es einen als Einsteckbereich 27 ausgebildeten weiteren Verbindungsbereich auf, welcher in weiteren Teilen dem Einsteckbereich 14 des Steckerteils 13 in zur Verbindungsstelle spiegelbildlicher Ausgestaltung entspricht. Der Einsteckbereich 27 weist wiederum auf einem dem Steckerteil 13 abgewandten Ende eine Befestigungslasche 28 mit einer darin eingebrachten Befestigungsöffnung 29 auf. Das Buchsenteil 26 wird zur Montage mit dem Einsteckbereich 27 in den Stromschieneninnenraum 10 der Stromschiene 4 eingeschoben, bis die Befestigungsöffnung 29 mit einer nicht näher bezeichneten Durchgangsöffnung in der Seitenwandung der Stromschiene 4 gebracht. Anschließend wird ein Blindniet 30 durch die Durchgangsöffnung und die Befestigungsöffnung 29 gesteckt und in an sich bekannter Weise vernietet. Hierdurch wird wieder eine sichere mechanische und elektrische Verbindung des Buchsenteils 26 mit der Stromschiene 4 erreicht.

Die Ausgestaltung der Blindniet 30 und die Befestigungsweise zwischen Buchsenteil 26 und Stromschiene 4 entsprechen der oben zum Blindniet 17 und Steckerteil 13 beschriebenen. So besteht der Blindniet 30 bevorzugt aus elektrisch leitendem Material, sodass das Buchsenteil 26 sowohl über den Blindniet 30 als auch durch die flächige Anlage an der Seitenwandung mechanisch wie auch elektrisch leitend mit der Stromschiene 4 verbunden ist. Bevorzugt sind die Befestigungsöffnung 29 und die Durchgangsöffnung so angeordnet, dass der Einsteckbereich 27 bei eingestecktem Buchsenteil 26 mit der Stirnseite der Stromschiene 4 bündig abschließt.

Anstelle der oben beschriebenen Verbindungen mit Befestigungsöffnungen 16 bzw. 29 und Blindnieten 17 bzw. 30 sind auch andere Verbindungsmöglichkeiten denkbar. Beispielsweise können die Befestigungsöffnungen 16 bzw. 29 mit einem Innengewinde versehen sein, und anstelle der Blindnieten 17 bzw. 30 werden dann Befestigungsschrauben durch die Durchgangsöffnungen der Seitenwandung 7 bzw. 9 gesteckt und dann in das Innengewinde der Befestigungsöffnung 16 bzw. 29 eingeschraubt. Hierdurch kann das Steckerteil 13 bzw. das Buchsenteil 26 sowohl mechanisch als auch elektrisch fest mit der Stromschiene 4 bzw. 5 verbunden werden.

Alternativ können anstelle der Blindnieten 17 bzw. 30 auch Schnappelemente vorgesehen werden, welche durch die die Durchgangsöffnungen und die Befestigungsöffnungen 16 bzw. 29 durchgesteckt werden und dass das Steckerteil 13 bzw. das Buchsenteil 26 dann fest an die Seitenwandungen 7 bzw. 9 anziehen.

Dabei bestehen dann die Befestigungsschrauben bzw. Schnappelemente bevorzugt aus elektrisch leitendem Material, sodass das Steckerteil 13 bzw. das Buchsenteil 26 sowohl über die Befestigungsschrauben bzw. Schnappelemente als auch durch die flächige Anlage an der Seitenwandung 7 bzw. 9 mechanisch wie auch elektrisch leitend mit der Stromschiene 4 bzw. 5 verbunden sind.

Weiter weist das Buchsenteil 26 auf seiner der Befestigungslasche 28 abgewandten und dem Steckerteil 13 zugewandten Ende eine in Längsrichtung L verlaufende längliche Verbindungsöffnung 31, insbesondere Verbindungsbohrung, auf, in die der Verbindungsstecker 21 vollständig eingesteckt werden kann. Dabei ist die Länge des Distanzstücks 22 so bemessen, dass selbst bei maximal erlaubtem Dehnungsspalt zwischen der Stromschiene 4 und der Stromschiene 5 der näher am Distanzstück 22 liegende hintere Lamellenkontakt 23 vollständig in der Verbindungsöffnung 31 bleibt.

Der Durchmesser der Verbindungsöffnung 31 ist so bemessen, dass der Verbindungsstecker 21 eingesteckt werden kann, wobei die Lamellenkontakte 23, 24 in an sich bekannter Weise nach außen gegen die Innenwandung der Verbindungsöffnung 31 gedrückt werden, um eine sichere elektrische Verbindung zwischen dem Steckerteil 13 und dem Buchsenteil 26 herzustellen. Weiter ist die Länge der Verbindungsöffnung 31 so bemessen, dass der Verbindungsstecker 21 bei bündig aneinander liegenden Stromschienen 4 und 5 vollständig in das Buchsenteil 26 eingeschoben werden kann, wobei bevorzugt noch ein gewisser Sicherungsraum der Verbindungsöffnung 31 verbleibt.

An seinem der Verbindungsöffnung 31 abgewandten Ende im Bereich seitlich, also quer zur Längsrichtung L vor der Befestigungslasche 28 weist das Buchsenteil 26 stirnseitig eine Sicherungsöffnung 32 auf, bevorzugt eine Bohrung, Sackloch o.ä. Die Sicherungsöffnung 32 befindet sich bei eingestecktem Buchsenteil 26 im Bereich des Längsschlitzes 11 und ist somit von außen zugänglich wie die Längsnut 18 des Steckerteils 13.

Um sicherzustellen, dass die Stromschienen 4 und 5 nicht vollständig auseinandergezogen werden können, sondern nur so weit, wie durch einen maximalen erlaubten Dehnspalt D vorgegeben, ist ein als länglicher Sicherungsbügel 33 ausgebildetes Sicherungselement vorgesehen, welcher insbesondere in Fig. 1, 2, 5 und 9 gut erkennbar ist. Der Sicherungsbügel 33 ist vorliegend aus einem stabilen Rundmaterial, insbesondere runden Draht, gebogen und weist an seinem einen steckerseitigen Ende einen im Wesentlichen um 90° abwinkelten Gleitanschlag 34 auf. An seinem gegenüberliegenden, buchsenseitigen Ende ist der Sicherungsbügel 33 um rund 180° in Richtung des Gleitanschlags 34 zurückgebogen und bildet somit ein Halteende 35 aus.

Um das Steckerteil 13 und das Buchsenteil 26 miteinander zu verbinden, wird der Sicherungsbügel 33 zunächst mit dem stark zurückgebogenen Halteende 35 auf der Seite des Buchsenteils 26 von unten durch den Längsschlitz 11 der Stromschiene 4 geführt und in die Sicherungsöffnung 32 eingehakt. Anschließend werden die Stromschienen 4, 5 ganz aneinandergeschoben und dann der Sicherungsbügel 33 mit seinem als Gleitanschlag 34 ausgebildeten, zur Stromschiene 5 hin weisenden anderen Ende von unten durch den Längsschlitz 11 der Stromschiene 5 geschoben und in die Längsnut 18 eingeführt.

Um zu verhindern, dass der Sicherungsbügel 33 während des Betriebs nach unten aus dem Längsschlitz 11 herausfällt, wird das in Fig. 1 und 7 gezeigte und in Fig. 5 stellenweise angedeutete, die Stromschienen 4 und 5 im endmontierten Zustand umgebende Isolierprofil 36 über die Verbindungsstelle der Stromschienen 4 und 5 geschoben. Das Isolierprofil 36 ist hierzu auf der unteren Seite, also der Seite des Längsschlitzes 11, durchgängig und verschließt den Längsschlitz 11 somit vollständig. Hierdurch wird insbesondere der Gleitanschlag 34 des Sicherungsbügels 33 in der Längsnut 18 gehalten.

Wie oben bereits beschrieben, darf der Dehnspalt D zwischen der Stromschiene 4 und 5 einen maximalen Abstand nicht überschreiten, der im wesentlichen zum einen durch die Länge der über den Dehnspalt D fahrenden Schleifstücke und zum anderen durch die vor allem temperaturabhängigen Längenänderungen der Stromschienen 4 und 5 vorgegeben ist.

Sowohl die Länge des Distanzstücks 22 als auch der Verbindungsöffnung 31 und des Sicherungsbügels 33 sind so bemessen, dass bei maximalem Dehnspalt D der dem Distanzstück 22 nähere hintere Lamellenkontakt 23 noch in der Verbindungsöffnung 31 verbleibt, um eine voll leistungsfähige elektrische Verbindung des Steckerteils 13 mit dem Buchsenteil 26 sicherzustellen. Auch ist die Länge der Längsnut 18 so zu bemessen, dass bei unmittelbar aneinander liegenden Stromschienen 4, 5 der Gleitanschlag 33 des Sicherungsbügels 33 nicht an dem hinteren, dem Distanzstück 22 abgewandten hinteren Ende 20 der Längsnut 18 des Steckerteils 13 anstößt, da sonst das Halteende 35 des Sicherungsbügels 35 aus der Sicherungsöffnung 32 des Buchsenteils 26 herausgeschoben würde.

Der Verbindungsstecker 21 kann anstelle eines runden Querschnitte auch andere Querschnittsformen aufweisen, beispielsweise viereckig, rechteckig, quadratisch, sechseckig, elliptisch, unregelmäßig etc., wobei dann die Verbindungsöffnung 31 entsprechenden Innenquerschnitt aufweisen muss.

Auch kann das Sicherungselement 33 aus einem anderen Material bestehen, und andere Querschnitte aufweisen, beispielsweise aus einem schmalen Blechmaterial.

Anstelle der oben beschriebenen Stromschienen 5, 6 mit Innenraum 10 gibt es aber auch Stromschienen, welche nicht aus einem Hohlprofil hergestellt sind, wie oben beschrieben und insbesondere in Fig. 7 gezeigt, sondern weitgehend aus Vollmaterial gefertigt sind. Dies gilt insbesondere für Stromschienen, die für hohe Ströme und somit hohe Leistungen ausgelegte sind. Anstelle des Innenraums 10 können dann an den Stirnseiten der aneinanderstoßenden Stromschienen spezielle Aufnahmen für die Verbindungsbereiche 14 bzw. 27 des Steckerteils 13 bzw. Buchsenteils 26 vorgesehen werden. Ggf. kann bei solchen Stromschienen der Dehnverbinder 12 auch auf der Außenseite der Stromschienen montiert werden, insbesondere auf der dem Längsschlitz 11 gegenüberliegenden Seite.

In einer weiteren Ausgestaltung können die elektrischen Kontakte, insbesondere die oben genannten Lamellenkontakte, Drahtfederkontakte oder Federkorbkontakte, nicht am Außenumfang des Verbindungssteckers 21 angeordnet sein, sondern im Inneren der Verbindungsöffnung 31. Dies bietet den Vorteil, dass die elektrischen Kontakte von der sie umgebenden Verbindungsöffnung 31 gegen äußere Einflüsse geschützt sind.

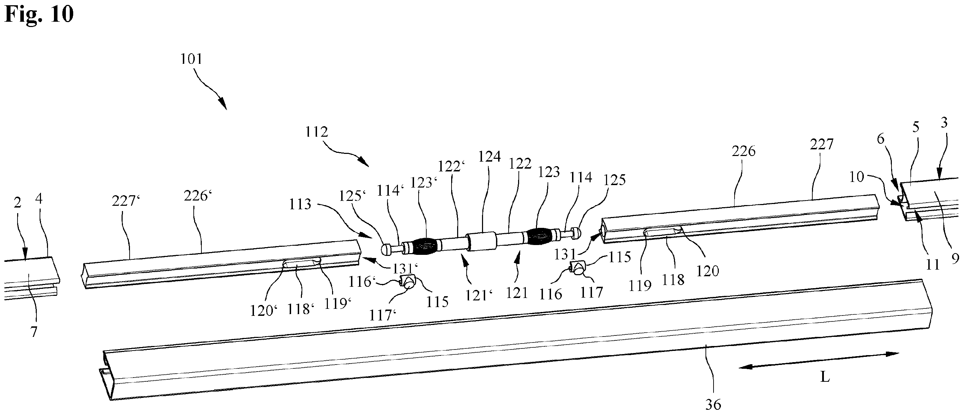

Fig. 10 zeigt eine schematische dreidimensionale Explosionsansicht eines alternativen erfindungsgemäßen Dehnverbinders 112 einer weiteren erfindungsgemäßen Schleifleitung 101, welche in weiten Teilen der Schleifleitung 1 gleicht, so dass die obigen Ausführungen entsprechend gelten, sofern nicht ausdrücklich etwas anderes angegeben wird. Dies gilt insbesondere für die Materialien, aus denen die einzelnen Bestandteile hergestellt sind. Nachfolgend wird deshalb vor allem auf die Unterschiede der beiden Ausführungen eingegangen, und gleiche oder einander entsprechende Teile werden deshalb mit den gleichen Begriffen und Bezugsziffern bezeichnet.

Der Dehnverbinder 112 unterscheidet sich vor allem dadurch vom Dehnverbinder 12, dass er nicht ein Steckerteil 13 und ein Buchsenteil 26 aufweist, welche jeweils mit Einsteckbereichen 14 bzw. 27 in die erste bzw. zweite Stromschiene 4, 5 eingesteckt sind, sondern ein Steckerteil 113 und zwei Buchsenteile 126, 126', wobei das Steckerteil 113 in die Buchsenteile 126, 126' eingesteckt wird.

Dabei weist das Steckerteil 113 in Längsrichtung L einander gegenüberliegende Verbindungsstecker 121, 121' auf, welche über ein Mittelteil 124 miteinander verbunden sind. An das Mittelteil 124 schließen sich in Längsrichtung L beidseitig Distanzstücke 122, 122' kleineren Querschnitts an, an welche sich dann wieder in Längsrichtung L beidseitig Lamellenkontakte 123, 123' anschließen. An die Lamellenkontakte 123, 123' schließen sich in Längsrichtung L wiederum beidseitig stiftförmige Sicherungsabschnitte 114, 114' an. An die in Längsrichtung L äußeren, dem Mitteilteil 124 abgewandten Enden der Sicherungsabschnitte 114, 114' schließen sich dann in Längsrichtung L beidseits wieder kegelförmige Steckerspitzen 125, 125' an. Zumindest die an die Sicherungsabschnitte 114, 114' in Längsrichtung L angrenzenden Teile der Verbindungsstecker 121, 121' weisen gegenüber den Sicherungsabschnitten 114, 114' größeren Querschnitt auf.

Um eine gute elektrische Verbindung zwischen den Stromschienen 4, 5 herzustellen, werden separate Buchsenteile 126, 126' des Dehnverbinders 112 mit ihren Einsteckbereichen 127, 127' in den Innenraum 11 der Stromschiene 4 bzw. 5 eingesteckt. Wie oben bereits beschrieben, können die Einsteckbereiche 127, 127' bzw. deren Außenquerschnitt vorteilhaft an den Innenquerschnitt des Innenraums 11 angepasst sein, beispielsweise in Art einer Presspassung, um einen sicheren Sitz der Buchsenteile 126, 126' in den Stromschienen 4, 5 zu gewährleisten. Es können aber auch andere Befestigungen gewählt werden, beispielsweise können an den stromschienenseitigen Enden der Buchsenteile 126, 126' die oben beim ersten Ausführungsbeispiel des Dehnverbinders 12 beschriebenen Verbindungen mittels Befestigungslaschen 15, 28, Befestigungsöffnungen 16, 29 und Blindnieten 17, 30 vorgesehen werden.

Weiter weisen die Buchsenteile 126, 126' auf ihren den Stromschienen 4, 5 in Längsrichtung L abgewandten, also dem Steckerteil 113 zugewandten Enden in Längsrichtung L verlaufende längliche Verbindungsöffnungen 131, 131', vorliegend in Form von Verbindungsbohrungen auf. In die Verbindungsöffnungen 131, 131' können dann die jeweiligen Verbindungsstecker 121, 121' vollständig eingesteckt werden, bis die Stirnseiten der Buchsenteile 126, 126' an das Mitteilteil 124 anschlagen. Hierzu weist das Mittelteil 124 größeren Querschnitt auf als die sich daran in Längsrichtung L anschließenden Teile der Verbindungsstecker 121, 121', welche ihrerseits einen an die Innenkontur der Verbindungsöffnungen 131, 131' angepasste Außenkontur aufweisen. Dabei sind die oben im Detail beschriebenen Lamellenkontakte 123, 123' so an die Innenkonturen der Verbindungsöffnungen 131, 131' angepasst, dass eine gute elektrische Verbindung hergestellt werden kann.

Die Ausdehnung des Mittelteils 124 in Längsrichtung L und die Einstecktiefe der Buchsenteile 126, 126' in Längsrichtung L kann dabei vorteilhaft so gewählt sein, dass die Stromschienen 4, 5 auf Stoß zusammengeschoben werden können. Bei der in Fig. 10 gezeigten Ausgestaltung sind die Buchsenteile 126, 126' in den Innenraum 10 der beiden Stromschienen 3, 4 so weit eingeschoben, dass auch das Mittelteil 124, welches größeren Durchmesser als die Verbindungsöffnungen 131, 131' hat und somit nicht in diese eingeschoben werden kann, noch jeweils hälftig in den Innenraum 10 der rechten bzw. linken Stromschiene 3 bzw. 4 ragt.

Weiter können die Längen der Distanzstücke 122, 122' vorteilhaft so bemessen sein, dass selbst bei maximal erlaubtem Dehnungsspalt zwischen der Stromschiene 4 und der Stromschiene 5 die Lamellenkontakte 123, 123' vollständig in der jeweiligen Verbindungsöffnung 131 bzw. 131' verbleiben. Ggf. können abhängig von der gewünschten zu übertragenden Strommenge auch weitere Lamellenkontakte vorgesehen werden, wie z.B. bei der in Fig. 1 bis 9 beschriebenen Ausgestaltung.

Um sicherzustellen, dass sich die Stromschienen 4 und 5 nur bis zu dem vorgegebenen maximalen erlaubten Dehnspalt D auseinander bewegen können, weisen die Buchsenteile 126, 126' auf ihrer dem trogförmigen Schleifabschnitt 6 der Stromschienen 4, 5 abgewandten, in Fig. 10 unteren Seite jeweils ein bis zur Verbindungsöffnung 131, 131' durchreichendes Langloch 118, 118' auf. Werden die Verbindungsstecker 121, 121' so weit in die Verbindungsöffnungen 131, 131' eingesteckt, dass die stiftförmigen durch die Langlöcher 118, 118' zugänglich sind, können durch die Langlöcher 118, 118' Sicherungselemente 115, 115' auf die Sicherungsabschnitte 114, 114' gesteckt werden.

Hierzu weisen die Sicherungselemente 115, 115' Aufsteckklipps 116, 116' auf, welche eine an die Außenkontur der Sicherungsabschnitte 114, 114' angepasste Innenkontur aufweisen, wobei die in Fig. 10 erkennbare Längsausnehmung der Aufsteckklipps 116, 116' geringfügig schmaler ist als der Querschnitt der Sicherungsabschnitte 115, 115'. Hierdurch können die Aufsteckklipps 116, 116' auf die Sicherungsabschnitte 115, 115' geklippst und dort dauerhaft gehalten werden. Das Aufklippen kann auch mittels anderer zueinander passender Konturen der Sicherungsabschnitte 115, 115' und Aufsteckklipps 116, 116' erreicht werden. Anstelle des Aufklippens können auch andere Befestigungsmittel verwendet werden, die ein nachträgliches Aufbringen der Sicherungselemente 115, 115' auf die Verbindungsstecker 121, 121' zu ermöglichen.

Auf ihren den Langlöchern 118, 118' liegenden Seite weisen die Sicherungselemente 115, 115' jeweils Gleitanschläge 117 bzw. 117' auf, welche von den Verbindungsöffnungen 131, 131' in die Langlöcher 118, 118' reichen. Dabei bilden die den Verbindungssteckern 121, 121' zugewandten Enden der Langlöcher 118, 118' wieder vordere Sicherungsanschläge 119, 119' aus, um zu verhindern, dass die Verbindungsstecker 121, 121' ganz und bevorzugt auch nicht weiter als durch den maximalen Dehnspalt vorgegeben aus den Verbindungsöffnungen 131, 131' herausgezogen werden können. Hierdurch können die Verbindungsstecker 121, 121'in den durch die Langlöcher 118, 118' vorgegebenen Grenzen in Längsrichtung L hin und her bewegt werden, um unterschiedliche Ausdehnungen der Schleifleitung 101 abzufangen.

Bevorzugt können die Langlöcher 118, 118' und die Sicherungselemente 115, 115' so zueinander angeordnet und bemessen werden, dass bei jeweils maximal herausgezogenen Verbindungssteckern 121 bzw. 121' die Lamellenkontakte 123, 123' vollständig in der jeweiligen Verbindungsöffnung 131 bzw. 131' verbleiben, um eine ausreichende Stromübertragung sicherzustellen.

Auch könnte die Längsbewegung der Verbindungstecker 121, 121' in Längsrichtung L auch dadurch ermöglicht werden, dass die Ausdehnung der stiftförmigen Sicherungsabschnitte 114, 114' in Längsrichtung L größer gewählt wird als die Ausdehnung der Aufsteckklipps 116, 116' in Längsrichtung L. Anstelle der Langlöcher 118, 118' könnten dann in den Buchsenteilen 126, 126' auch einfache Bohrungen oder Ausnehmungen zur Aufnahme der Gleitanschläge 117, 117' vorgesehen werden, so dass die Ausdehnung der Schleifleitung in Längsrichtung L durch die in Längsrichtung L auf den Sicherungsabschnitten 114, 114' bewegbaren Aufsteckklipps 116, 116' erfolgt. Auch eine Kombination dieser Ausgestaltung mit den Langlöchern 118, 118' ist vorteilhaft möglich.

Anstelle der durch die Langlöcher 118, 118' auf die Sicherungsabschnitte 114, 114' aufklippsbaren Sicherungselementen 115, 115' können auch andere Ausgestaltungen der Sicherungselemente vorgesehen werden, um eine Bewegung bis zum maximalen Dehnspalt zu ermöglichen. Beispielsweise könnten die Gleitanschläge 117, 117' direkt in den Verbindungssteckern 121, 121' und in diese senkrecht zur Längsrichtung L rückfedernd versenkbar in Vertiefungen der Verbindungsstecker 121, 121' angeordnet werden. Zum Einstecken der Verbindungsstecker 121, 121' in die Verbindungsöffnungen 131, 131' würden die Gleitanschläge 117, 117' dann so weit in die Verbindungsstecker 121, 121' eingedrückt werden, dass sie das Einstecken der Verbindungsstecker 121, 121' in die Verbindungsöffnungen 131, 131' nicht blockieren, und bei Erreichen der Langlöcher 118, 118' würden die Gleitanschläge durch in den Vertiefungen angeordnete Federelemente nach außen gedrückt werden und in die Langlöcher 118, 118' einschnappen. Bei dieser Ausgestaltung könnte sogar überlegt werden, dass die Langlöcher 118, 118' nicht von den Verbindungsöffnung 131, 131' vollständig durch die Buchsenteil 126, 126' nach außen reichen, sondern lediglich innen an den Verbindungsöffnungen 131, 131' eingebracht werden.

Ebenso könnten anstelle von einklippsbaren Sicherungselement 115, 115' in den Verbindungssteckern 121, 121' Gewindebohrungen eingebracht werden, in die als Sicherungselemente dienende Schrauben eingeschraubt werden, welche in die Langlöcher 118, 118' hineinreichen.

Ggf. kann die oben zu Fig. 10 beschriebene Ausgestaltung eines Sicherungselements 115 auch auf die zu Fig. 1 bis 9 beschriebene Ausgestaltung übertragen werden. Es reicht dort dann aus, dass an passender Stelle zwischen der Steckerspitze 25 und dem Steckerteil 13 ein Sicherungsabschnitt 114 vorgesehen wird, und in dem Buchsenteil 26 dann an passender Stelle ein Langloch 118. Die Längsnut 18 im Steckerteil 13 und der Sicherungsbügel 33 wie auch die Sicherungsöffnung 32 könnten dann weggelassen werden. Der Sicherungsabschnitt 114 könnte beispielsweise zwischen Steckerspitze 25 und vorderen Lamellenkontakt 24, zwischen hinterem Lamellenkontakt 23 und Distanzstück 22 oder auch statt des vorderen oder hinteren Lamellenkontakts 23, 24 vorgesehen werden. Auch die oben beschriebenen alternativen Ausgestaltungen könnten entsprechend übertragen werden.

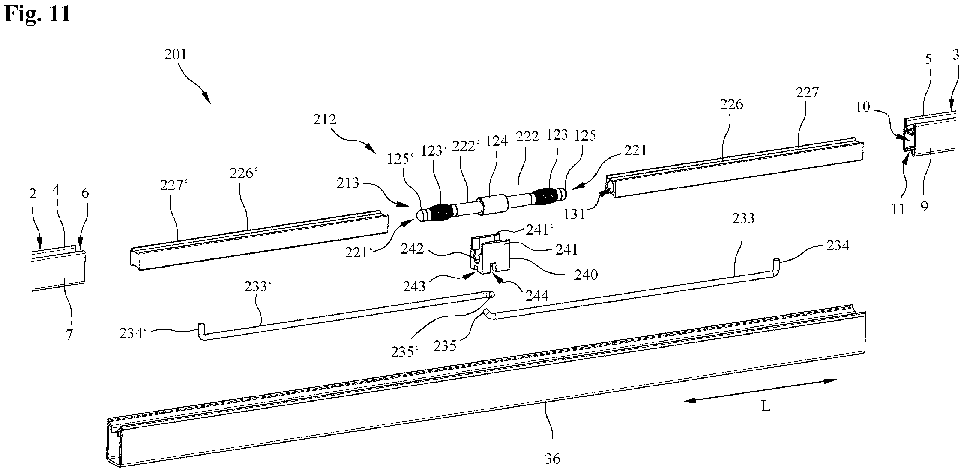

Fig. 11 zeigt eine schematische dreidimensionale Explosionsansicht noch eines weiteren erfindungsgemäßen Dehnverbinders 212 einer weiteren erfindungsgemäßen Schleifleitung 201, welche in weiten Teilen der Schleifleitung 101 und auch der Schleifleitung 1 gleicht, so dass die obigen Ausführungen entsprechend gelten, sofern nicht ausdrücklich etwas anderes angegeben wird. Nachfolgend wird deshalb vor allem auf die Unterschiede der Ausführungen eingegangen, und gleiche oder einander entsprechende Teile werden deshalb mit den gleichen Begriffen und Bezugsziffern bezeichnet.

Der Dehnverbinder 212 unterscheidet sich vor allem dadurch vom Dehnverbinder 112, wie die Begrenzung der Bewegung der Leiterstränge 2, 3 in Längsrichtung L auf den maximal erlaubten Dehnspalt erfolgt.

Dabei gleicht ein doppelseitige Steckerteil 213 mit Verbindungssteckern 221, 221' weitgehend dem Steckerteil 113 aus Fig. 10, wobei die Verbindungsstecker 221, 221' keine Sicherungsabschnitte 114, 114' aufweisen, sondern sich Steckerspitzen 225, 225' in Längsrichtung L direkt an Lamellenkontakte 223, 223' anschließen. Ansonsten gilt das hierzu oben ausgeführt entsprechend.

Um sicherzustellen, dass sich die Stromschienen 4 und 5 nur bis zu dem vorgegebenen maximalen erlaubten Dehnspalt D auseinander bewegen können, weisen weitgehend wie die Buchsenteile 126, 126' ausgebildete alternative Buchsenteile 226, 226' keine Langlöcher 118, 118' auf, sondern in den Zeichnungen nicht gezeichnete Längsnuten auf ihrer dem trogförmigen Abschnitt 6 abgewandten und dem Längsschlitz 11 der Stromschienen 4, 5 zugewandten Unterseite. Die Längsnuten entsprechen in ihrer Ausgestaltung und Funktion der Längsnut 18 der in Fig. 1 bis 9 gezeigten Ausgestaltung.

Weiter ist nicht nur ein Sicherungselement 33 wie in Fig. 1 bis 9 gezeigt vorgesehen, sondern zwei als Sicherungsbügel 233, 233' ausgebildete Sicherungselemente. Die Sicherungsbügel 233, 233' sind identisch ausgebildet, aber spiegelbildlich angeordnet. Die Sicherungsbügel 233, 233' weisen jeweils wie der Sicherungsbügel 33 an ihren dem Steckerteil 213 abgewandten Enden senkrecht zur Längsrichtung L verlaufende Gleitanschläge 234, 234' auf, welche im eingebauten Zustand von unten nach oben zur jeweiligen Längsnut im Buchsenteil 226, 226' hin zeigen und in zusammengebauten Zustand in die jeweilige Längsnut eingreifen. An ihren in Längsrichtung L entgegengesetzten Enden weisen die Sicherungsbügel 233, 233' jeweils senkrecht zur Längsrichtung L verlaufende und gegenüber den Gleitanschlägen 234, 234' abgewinkelte, bevorzugt um etwa 80° und/oder um maximal 90° abgewinkelte Halteenden 235, 235' auf. Die Sicherungsbügel 233, 233' sind wie der Sicherungsbügel 33 auch aus einem stabilen Rundmaterial, insbesondere rundem Draht, gebogen.

Um die in Längsrichtung L gerichtete Bewegung zwischen dem Steckerteil 213 und den Buchsenteilen 226, 226' zu ermöglichen, ist eine Halterung 240 vorgesehen. Die Halterung 240 weist zwei in Längsrichtung L und parallel zu den Seitenwandungen 7, 7' bzw. 9, 9'der ersten bzw. zweiten Stromschiene 3, 4 verlaufende, etwa U-förmige Klemmschenkel 241, 241' auf. Die Klemmschenkel 241, 241' münden im U-Grund in zwei sich daran anschließende und hierzu quer, also auch quer zur Längsrichtung L erstreckende Rastaufnahmen, von denen in Fig. 11 nur die Rastaufnahme 242 erkennbar ist. Die Rastaufnahme 242 weist dabei eine an die Außenkontur eines Distanzstücks 222 des Verbindungsteckers 221' angepasste C-förmige Innenkontur auf, so dass das Distanzstück 222' mit leichtem Druck in die Rastaufnahme 242 eingesetzt werden kann und dann dort verrastend gehalten wird. Entsprechendes gilt auch für die nicht gezeigte Rastaufnahme. Vorteilhaft kann die Halterung 240 aus Kunststoff gefertigt sein, so dass die Rastaufnahmen 242 die Rastfunktion einfach realisieren können.

Auf ihrer dem Steckerteil 213 abgewandten unteren Seite weist die Halterung 240 in der Wandung der Rastaufnahme 242 eine in Längsrichtung L verlaufende Haltenut 243 für den in Längsrichtung L verlaufenden Teil des Sicherungsbügels 234' und in der Wandung des in Fig. 11 vorderen Klemmschenkels 241 eine weitere, etwas tiefere Haltenut 244 für den quer zur Längsrichtung L verlaufenden und gegenüber dem Gleitanschlag 234' um etwa 80° abgewinkelten Halteende 235' des Sicherungsbügels 234' auf. Vorteilhaft kann eine oder beide der Haltenuten 243, 244 geringfügig schmaler sein als der Sicherungsbügel 234' und/oder das Halteende 235', um den Sicherungsbügel 234' an der Halterung 240 zusätzlich festzuklemmen.

Der Sicherungsbügel 234' kann somit ortsfest am Steckerteil 213 angeordnet werden, so dass die maximale Bewegung in Längsrichtung L des Buchsenteils 226' durch den in dessen Längsnut eingreifenden Gleitanschlag 234' begrenzt werden kann. Entsprechend wird der weitere Sicherungsbügel 233 an der Halterung 240 in entsprechende, von oben gesehen um 180° versetzte Haltenuten der anderen Wandungen der Halterungen 240 eingesetzt.

Entsprechend der in Fig. 1 bis 9 gezeigten Ausführung kann das Isolierprofil 36 auch bei der in Fig. 11 gezeigten Ausführung dazu genutzt werden, um zu verhindern, dass der Sicherungsbügel 233 während des Betriebs nach unten aus dem Längsschlitz 11 herausfällt. So kann das die Stromschienen 4 und 5 im endmontierten Zustand umgebende Isolierprofil 36 nach der Montage des Dehnverbinders 212 über die Verbindungsstelle der Stromschienen 4 und 5 geschoben werden, um somit den Längsschlitz 11 zu verschließen und die Gleitanschläge 234, 234' der Sicherungsbügel 233, 233' sowohl in den Längsnuten der Buchsenteile 226, 226' als auch in der Halterung 240 zu halten.

In einer denkbaren Kombination der Ausführungen in Fig. 1 bis 9 und Fig. 11 könnte anstelle der Halterung 240 und der beiden getrennten Sicherungsbügel 233, 233' auch nur ein langer Sicherungsbügel mit Gleitanschlägen 234, 234' an seinen Enden verwendet werden, welche in die Längsnuten der Buchsenteile 226, 226' eingreifen. Gegenüber der eben beschriebenen Ausgestaltung verringert sich dadurch aber der vorgegeben maximale Dehnspalt, da bei einem ganz in die Verbindungsöffnung 131 des Buchsenteils 226 eingeschobenem Verbindungsstecker 221 der Lamellenkontakt 123' des anderen Buchsenteils 226' noch in der anderen Verbindungsöffnung 131' verbleiben muss. Würde der maximale Dehnspalt größer gewählt, so bestünde zunächst die Gefahr, dass der Lamellenkontakt 123' unter Verschlechterung der elektrischen Stromübertragung teilweise aus der Verbindungsöffnung 131' herausgelangt, oder der Verbindungsstecker 121' sogar vollständig aus der Verbindungsöffnung 131 herausgelangt, wodurch die elektrische Verbindung gelöst wird. Gerade bei größeren Strömen und insbesondere im Gleichstromfall besteht dann die Gefahr eines zeitweisen oder dauerhaften Spannungsüberschlags, welcher sehr nachteilig ist für die Schleifleitung bzw. die damit ausgestattete Anlage, insbesondere auch deren elektrischen Teil ist.

Bei der in Fig. 11 gezeigten Ausgestaltung hingegen können vorteilhaft die beiden Buchsenteile 226, 226' soweit vom Steckerteil 213 in Längsrichtung L weg bewegt werden, dass die Lamellenkontakte 123, 123' noch in der Verbindungsöffnung 131 bzw. 131' verbleiben.

Wie oben bereits angegeben, darf der Dehnspalt D zwischen der Stromschiene 4 und 5 einen maximalen Abstand nicht überschreiten, der im wesentlichen zum einen durch die Länge der über den Dehnspalt D fahrenden Schleifstücke und zum anderen durch die vor allem temperaturabhängigen Längenänderungen der Stromschienen 4 und 5 vorgegeben ist. Sowohl die Länge der Distanzstücke 122, 122' bzw. 222, 222' als auch der Verbindungsöffnungen 131, 131' und der Sicherungsbügel 233, 233' bzw. der Langlöcher 118, 118' und Längsnuten der Buchsenteile 226, 226' sind so bemessen, dass bei maximalem Dehnspalt D die Lamellenkontakte 123, 123' noch in den Verbindungsöffnungen 131, 131' verbleiben, um eine voll leistungsfähige elektrische Verbindung des Steckerteils 113 bzw. 213 mit den Buchsenteilen 126, 126' bzw. 226, 226' sicherzustellen. Auch ist die Länge der Langlöcher 118, 118' bzw. der Längsnuten der Buchsenteile 226, 226' so zu bemessen, dass bei unmittelbar aneinander liegenden Stromschienen 4, 5 die Sicherungselemente 115, 115' bzw. die Gleitanschläge 234, 234' der Sicherungsbügel 233, 233' nicht an den den Distanzstücken 122, 122' bzw. 222, 222' abgewandten hinteren Enden 120, 120' der Langlöcher 118, 118' bzw. der Längsnuten der Buchsenteile 226, 226' anstoßen.

Die Verbindungsstecker 121, 121' bzw. 221, 221' können anstelle eines runden Querschnitts auch andere Querschnittsformen aufweisen, beispielsweise viereckig, rechteckig, quadratisch, sechseckig, elliptisch, unregelmäßig etc., wobei dann die Verbindungsöffnungen 131, 131' entsprechende angepassten Innenquerschnitt aufweisen sollten.

Auch kann das Sicherungselement 33 aus einem anderen Material bestehen, und andere Querschnitte aufweisen, beispielsweise aus einem schmalen Blechmaterial.

Werden anstelle der oben beschriebenen Stromschienen 5, 6 mit Innenraum 10 Stromschienen verwendet, die weitgehend aus Vollmaterial gefertigt sind, können die Buchsenteile 126, 126' bzw. 226, 226' ggf. auch unmittelbar aus dem Material der Stromschienen gebildet sein, in das dann die Verbindungsöffnungen 1331, 131' sowie die Langlöcher 118, 118' bzw. Längsnuten der Buchsenteile 226, 226' eingebracht werden.

### Bezugszeichenliste

- 1: Schleifleitung
- 2: erster Leiterstrang
- 3: zweiter Leiterstrang
- 4: erste Stromschiene
- 5: zweite Stromschiene
- 6: trogförmiger Schleifabschnitt
- 7, 7': Seitenwandungen erste Stromschiene
- 8, 8': Schenkelenden erste Stromschiene
- 9, 9': Seitenwandungen zweite Stromschiene
- 10: Innenraum Stromschienen
- 11: Längsschlitz Stromschienen
- 12: Dehnverbinder
- 13: Steckerteil
- 14: Einsteckbereich bzw. Verbindungsbereich Steckerteil
- 15: Befestigungslasche Steckerteil
- 16: Befestigungsöffnung Steckerteil
- 17: Blindniet Steckerteil
- 18: Längsnut
- 19: vorderer Sicherungsanschlag
- 20: hinteres Ende der Längsnut
- 21: Verbindungsstecker, z.B. Federkorbstecker
- 22: Distanzstück
- 23: hinterer Lamellenkontakte
- 24: vorderer Lamellenkontakte
- 25: kegelförmige Steckerspitze
- 26: Buchsenteil
- 27: Einsteckbereich bzw. Verbindungsbereich Buchsenteil
- 28: Befestigungslasche Buchsenteil
- 29: Befestigungsöffnung Buchsenteil
- 30: Blindniet Buchsenteil
- 31: längliche Verbindungsöffnung
- 32: Sicherungsöffnung
- 33: Sicherungsbügel
- 34: Gleitanschlag Sicherungsbügel
- 35: Halteende Sicherungsbügel
- 36: Isolierprofil
- 101: alternative Schleifleitung
- 112: alternativer Dehnverbinder
- 113: doppelseitiges Steckerteil
- 114, 114': stiftförmige Sicherungsabschnitte
- 115, 115': Sicherungselemente
- 116, 116': Aufsteckklipps
- 117, 117': Gleitanschläge
- 118, 118': Langlöcher
- 119, 119': vordere Sicherungsanschläge
- 120, 120': hintere Enden der Langlöcher
- 121, 121': Verbindungsstecker
- 122, 122': Distanzstücke
- 123, 123': Lamellenkontakte
- 124: Mittelteil mit stirnseitigen Anschlägen
- 125, 125': kegelförmige Steckerspitzen
- 126, 126': Buchsenteile
- 127, 127': Einsteckbereiche bzw. Verbindungsbereiche Buchsenteile
- 131, 131': längliche Verbindungsöffnung
- 201: weitere alternative Schleifleitung
- 212: alternativer Dehnverbinder
- 213: doppelseitiges Steckerteil
- 221, 221': Verbindungsstecker
- 222, 222': Distanzstücke
- 226, 226': Buchsenteile
- 233, 233': Sicherungsbügel
- 234, 234': Gleitanschläge Sicherungsbügel
- 235, 235': Halteenden Sicherungsbügel
- 240: Halterung der Sicherungsbügel
- 241, 241': Klemmschenkel
- 242: Rastaufnahmen
- 243: Haltenut für Sicherungsbügel
- 244: Haltenut für Halteende

- D: Dehnspalt
- L: Längsrichtung (Dehnrichtung) Schleifleitung

## Patentansprüche

1. Dehnverbinder (12; 112; 212) zum Verbinden von zwei in eine Längsrichtung (L) einer Schleifleitung (1) aufeinanderfolgenden Stromschienen (4, 5), wobei der Dehnverbinder (12; 112; 212) ein Buchsenteil (26; 126; 226) mit einer in Längsrichtung (L) verlaufenden Verbindungsöffnung (31; 131) und ein Steckerteil (13; 113; 213) mit einem in Längsrichtung (L) verlaufenden Verbindungsstecker (21; 121; 221) aufweist, wobei der Verbindungsstecker (21; 121; 221) zur Herstellung einer elektrischen Verbindung in Längsrichtung (L) in die Verbindungsöffnung (31; 131) einsteckbar ist.

2. Dehnverbinder (12) nach Anspruch 1, **dadurch gekennzeichnet, dass** ein elektrischer Kontakt (23) des Verbindungssteckers (21) in Längsrichtung (L) in einem Abstand von einem Verbindungsbereich (14) des Steckerteils (13) angeordnet ist, der größer als der vorgegebene maximale Dehnspalt (D) zwischen Steckerteil (13) und Buchsenteil (26) in Längsrichtung (L) ist.

3. Dehnverbinder (12) nach einem der voranstehenden Ansprüche, **dadurch gekennzeichnet, dass** der Dehnverbinder (12) ein Sicherungselement (33) aufweist, welches das Buchsenteil (26) und das Steckerteil (13) bis zu einem vorgegebenen maximalen Dehnspalt (D) in Längsrichtung (L) beweglich miteinander verbindet.

4. Dehnverbinder (12) nach einem der voranstehenden Ansprüche, **dadurch gekennzeichnet, dass** am Steckerteil (13) eine in Längsrichtung (L) verlaufende Längsausnehmung (18) vorgesehen ist, wobei mindestens ein Gleitanschlag (34) des Sicherungselements (33) in die Längsausnehmung (18) eingreift, und/oder das am Buchsenteil (26) eine in Längsrichtung (L) verlaufende weitere Längsausnehmung vorgesehen ist, wobei ein weiterer Gleitanschlag des Sicherungselements (33) in die weitere Längsausnehmung eingreift.

5. Dehnverbinder (12) nach Anspruch 4, **dadurch gekennzeichnet, dass** der Gleitanschlag (34) bei vorgegebenem maximalem Dehnspalt (D) zwischen Steckerteil (13) und Buchsenteil (26) an einem vorderen, der Verbindungsstelle zwischen Buchsenteil (26) und Steckerteil (13) zugewandten Sicherungsanschlag (19) der Längsausnehmung (18) anschlägt, und/oder dass der Dehnverbinder (12) zumindest auf der Seite des Sicherungselements (33) eine Abdeckung (36) vorsieht, welche den Gleitanschlag (34) in der Längsausnehmung (18) hält.

6. Dehnverbinder nach einem der voranstehenden Ansprüche, **dadurch gekennzeichnet, dass** im Buchsenteil eine in Längsrichtung (L) verlaufende, mit der Verbindungsöffnung in Verbindung stehende Längsausnehmung vorgesehen ist, in die im montierten Zustand ein am Verbindungsstecker angeordneter Gleitanschlag eingreift.

7. Dehnverbinder nach Anspruch 6, **dadurch gekennzeichnet, dass** die Längsausnehmung einen in Längsrichtung (L) dem Eingang der Verbindungsöffnung näheren vorderen Sicherungsanschlag für den Gleitanschlag ausbildet, und /oder die Längsausnehmung ein Langloch ist, das von der Verbindungsöffnung quer zur Längsrichtung (L) vollständig durch das Buchsenteil nach außen durchreicht, und/oder dass der Gleitanschlag an einem Sicherungsabschnitt des Verbindungssteckers befestigbar ist.

8. Dehnverbinder (112; 212) nach einem der voranstehenden Ansprüche, **dadurch gekennzeichnet, dass** der Dehnverbinder (112; 212) ein weiteres Buchsenteil (126'; 226') mit einer in Längsrichtung (L) verlaufenden weiteren Verbindungsöffnung (131') und das Steckerteil (113; 213) einen in Längsrichtung (L) dem Verbindungsstecker (121; 221) gegenüberliegenden weiteren Verbindungsstecker (121', 221') aufweist, wobei der weitere Verbindungsstecker (121', 221') zur Herstellung einer elektrischen Verbindung in Längsrichtung (L) in die weitere Verbindungsöffnung (131') einsteckbar ist.

9. Dehnverbinder (112; 212) nach Anspruch 8, **dadurch gekennzeichnet, dass** das Steckerteil (113; 213) ein zwischen den beiden Verbindungssteckern (121, 121'; 221, 221') angeordnetes Mittelteil (124) mit Anschlägen für die stirnseitigen Enden der Buchsenteile (126, 126'; 226, 226') aufweist, und/oder zwischen elektrischen Kontakten (123, 123'; 223, 223') der beiden Verbindungsstecker (121, 121'; 221, 221') des Steckerteils (113; 213) mindestens ein Distanzstück (122, 122'; 222, 222') angeordnet ist.

10. Dehnverbinder (112) nach einem der Ansprüche 8 bis 9, **dadurch gekennzeichnet, dass** in den Buchsenteilen (126; 126') jeweils eine in Längsrichtung (L) verlaufende, mit der jeweiligen Verbindungsöffnung (131; 131') in Verbindung stehende Längsausnehmung (118; 118') vorgesehen ist, in die im montierten Zustand ein am jeweiligen Verbindungsstecker (121; 121') angeordneter Gleitanschlag (117; 117') eingreift, insbesondere wobei die Längsausnehmungen (118; 118') jeweils einen in Längsrichtung (L) dem Eingang der jeweiligen Verbindungsöffnungen (131; 131') näheren vorderen Sicherungsanschlag (119; 119') für den jeweiligen Gleitanschlag (117; 117') ausbilden.

11. Dehnverbinder (112) nach Anspruch 10, **dadurch gekennzeichnet, dass** die Längsausnehmungen (118; 118') Langlöcher sind, die von der jeweiligen Verbindungsöffnung (131; 131') quer zur Längsrichtung (L) vollständig durch das jeweilige Buchsenteil (126; 126') nach außen durchreichen, und/oder wobei die Gleitanschläge (117; 117') an einem Sicherungsabschnitt (114; 114') des jeweiligen Verbindungssteckers (121; 121') befestigbar sind.

12. Dehnverbinder (212) nach einem der Ansprüche 8 bis 9, **dadurch gekennzeichnet, dass** in den Buchsenteilen (226; 226') jeweils eine in Längsrichtung (L) verlaufende Längsausnehmung (218; 218') vorgesehen ist, in welche Gleitanschläge (234, 234') mindestens eines länglichen Sicherungselements (233, 233') eingreifen.

13. Dehnverbinder (212) nach Anspruch 12, **dadurch gekennzeichnet, dass** zwei Sicherungselemente (233, 233') vorgesehen sind, welche jeweils einen der Gleitanschläge (234, 234') aufweisen, und in Längsrichtung (L) näher am Steckerteil (213) jeweils ein Halteende (235, 235') zur Befestigung an dem Steckerteil (213) oder einer am Steckerteil (213) befestigbaren Halterung (240).

14. Dehnverbinder (212) nach Anspruch 13, **dadurch gekennzeichnet, dass** die Gleitanschläge (234; 234') gegenüber dem Halteende (235; 235') des jeweiligen Sicherungselements (233; 233') quer zur Längsrichtung (L) abgewinkelt sind.

15. Dehnverbinder (212) nach Anspruch 14, **dadurch gekennzeichnet, dass** die Halterung (240) zur Befestigung der Sicherungselemente (233; 233') jeweils in Längsrichtung (L) verlaufende Haltenuten (243) für einen in Längsrichtung (L) verlaufenden Teil der Sicherungselemente (233; 233') und jeweils in Richtung der abgewinkelten Halteenden (235; 235') verlaufende weitere Haltenuten (244) aufweist, insbesondere wobei die Halterung (240) mindestens eine Rastaufnahme (242) zur Befestigung an dem Steckerteil (213) aufweist.

16. Schleifleitung (1; 101; 201) zur Versorgung eines in eine Längsrichtung (L) entlang der Schleifleitung (1; 101; 201) verfahrbaren elektrischen Verbrauchers mit elektrischer Energie, mit mindestens einer in Längsrichtung (L) verlaufenden ersten und zweiten Stromschiene (4, 5), wobei die Stromschienen (4, 5) einen in Längsrichtung (L) verlaufenden Schleifabschnitt (6) aufweisen, **dadurch gekennzeichnet, dass** zur Verbindung der ersten Stromschiene (4) und der zweiten Stromschiene (5) ein Dehnverbinder (12; 112; 212) nach einem der voranstehenden Ansprüche vorgesehen ist.

17. Schleifleitung (1; 101; 201) nach Anspruch 16, **dadurch gekennzeichnet, dass** sich an den Schleifabschnitt (6) Seitenwandungen (7, 7') anschließen, welche einen Innenraum (10) umgeben, und/oder dass das Steckerteil (13; 113; 213) in den Innenraum (10) der zweiten Stromschiene (5) eingesteckt und/oder elektrisch leitend mit der zweiten Stromschiene (5) verbunden ist, und/oder dass das Buchsenteil (26; 126; 226) in den Innenraum (10) der ersten Stromschiene (4) eingesteckt und/oder elektrisch leitend mit der ersten Stromschiene (4) verbunden ist.

18. Schleifleitung (1; 101; 201) nach einem der Ansprüche 16 bis 17, **dadurch gekennzeichnet, dass** die erste Stromschiene (4) und die zweite Stromschiene (5) auf ihrer dem Schleifabschnitt (6) abgewandten Seite einen in Längsrichtung (L) verlaufenden Längsschlitz (11) aufweisen, auf den die Sicherungsöffnung (32) des Buchsenteils (26) und/oder die Längsausnehmung (18) des Steckerteils (13) ausgerichtet sind.

19. Schleifleitung (1; 101; 201) nach Anspruch 18, **dadurch gekennzeichnet, dass** der Längsschlitz (11) zumindest im Bereich des Sicherungselements (33; 115, 115'; 233, 233') des Dehnverbinders (12) ganz oder zum Teil von einer Abdeckung (36) bedeckt ist, insbesondere wobei die Abdeckung (36) durch ein elektrisch isolierendes Isolierprofil gebildet ist, welches die erste Stromschiene (4) und zweite Stromschiene (5) zumindest im Bereich des Sicherungselements (33; 115, 115'; 233, 233') umgibt.

## Claims

1. Extensible connector (12; 112; 212) for connecting two conductor rails (4, 5) following one another in a longitudinal direction (L) of a contact line (1), the extensible connector (12; 112; 212) having a socket part (26; 126; 226) with a connecting opening (31; 131) extending in the longitudinal direction (L) and a plug part (13; 113; 213) having a connecting plug (21; 121; 221) extending in the longitudinal direction (L), the connecting plug (21; 121; 221) being insertable into the connecting opening (31; 131) in the longitudinal direction (L) to establish an electrical connection.

2. Extensible connector (12) according to claim 1, **characterized in that** an electrical contact (23) of the connecting plug (21) is arranged in the longitudinal direction (L) at a distance from a connecting portion (14) of the plug part (13) which is larger than the predetermined maximum expansion gap (D) between the plug part (13) and the socket part (26) in the longitudinal direction (L).

3. Extensible connector (12) according to one of the preceding claims, **characterized in that** the extensible connector (12) has a securing element (33) which movably connects the socket part (26) and the plug part (13) to one another up to a predetermined maximum expansion gap (D) in the longitudinal direction (L).

4. Extensible connector (12) according to one of the preceding claims, **characterized in that** a longitudinal recess (18) running in the longitudinal direction (L) is provided on the plug part (13), at least one sliding stop (34) of the securing element (33) engaging in the longitudinal recess (18), and/or **in that** a further longitudinal recess running in the longitudinal direction (L) is provided on the socket part (26), a further sliding stop of the securing element (33) engaging in the further longitudinal recess.

5. Extensible connector (12) according to claim 4, **characterized in that**, at a predetermined maximum expansion gap (D) between plug part (13) and socket part (26), the sliding stop (34) abuts against a front securing stop (19) of the longitudinal recess (18) facing the connection point between the socket part (26) and the plug part (13), and/or **in that** the extensible connector (12) provides, at least on the side of the securing element (33), a cover (36) which holds the sliding stop (34) in the longitudinal recess (18).

6. Extensible connector according to one of the preceding claims, **characterized in that** a longitudinal recess running in the longitudinal direction (L) which is in connection with the connecting opening is provided in the socket part, in which longitudinal recess a sliding stop arranged on the connecting plug engages in the assembled state.

7. Extensible connector according to claim 6, **characterized in that** the longitudinal recess forms a front securing stop for the sliding stop closer in the longitudinal direction (L) to the entrance of the connecting opening, and/or the longitudinal recess is an elongated hole which extends completely through the socket part to the outside from the connecting opening transversely to the longitudinal direction (L), and/or **in that** the sliding stop can be secured to a securing section of the connecting plug.

8. Extensible connector (112; 212) according to one of the preceding claims, **characterized in that** the extensible connector (112; 212) comprises a further socket part (126'; 226') having a further connecting opening (131') extending in the longitudinal direction (L) and the plug part (113; 213) has a further connecting plug (121'; 221') opposite the connecting plug (121; 221) in the longitudinal direction (L), the further connecting plug (121'; 221') being insertable into the further connecting opening (131') to establish an electrical connection in the longitudinal direction (L).

9. Extensible connector (112; 212) according to claim 8, **characterized in that** the plug part (113; 213) has a central part (124) arranged between the two connecting plugs (121, 121'; 221, 221') and having stops for the front ends of the socket parts (126, 126'; 226, 226'), and/or at least one spacer (122, 122'; 222, 222') is arranged between electrical contacts (123, 123'; 223, 223') of the two connecting plugs (121, 121'; 221, 221') of the plug part (113; 213).

10. Extensible connector (112) according to one of claims 8 to 9, **characterized in that** a respective longitudinal recess (118; 118') is provided in the socket parts (126; 126'), which longitudinal recess (118; 118') runs in the longitudinal direction (L) and is connected to the respective connecting opening (131; 131'), and in which longitudinal recess (118; 118') a sliding stop (117; 117') arranged on the respective connecting plug (121; 121') engages in the assembled state, in particular wherein the longitudinal recesses (118; 118') each form a front securing stop (119; 119'), closer in the longitudinal direction (L) to the entrance of the respective connecting openings (131; 131'), for the respective sliding stop (117; 117').

11. Extensible connector (112) according to claim 10 , **characterized in that** the longitudinal recesses (118; 118') are elongated holes which extend completely through the socket part (126; 126') to the outside from the respective connecting opening (131; 131') transversely to the longitudinal direction (L), and/or wherein the sliding stops (117; 117') can be fastened to a securing section (114; 114') of the respective connecting plug (121; 121').

12. Extensible connector (212) according to any one of claims 8 to 9, **characterized in that** a respective longitudinal recess (218; 218') running in the longitudinal direction (L) is provided in the socket parts (226; 226'), in which sliding stops (234, 234') of at least one elongate securing element (233, 233') engage.

13. Extensible connector (212) according to claim 12, **characterized in that** two securing elements (233, 233') are provided, each having one of the sliding stops (234, 234'), and, in the longitudinal direction (L) closer to the plug part (213), a retaining end (235, 235') for fastening to the plug part (213) or to a retainer (240) which can be fastened to the plug part (213).

14. Extensible connector (212) according to claim 13, **characterized in that** the sliding stops (234; 234') are angled transversely to the longitudinal direction (L) with respect to the retaining end (235; 235') of the respective securing element (233; 233').

15. Extensible connector (212) according to claim 14, **characterized in that** the retainer (240) for fastening the securing elements (233; 233') has retaining grooves (243) each running in the longitudinal direction (L) for a part of the securing elements (233; 233') running in the longitudinal direction (L) and further retaining grooves (244) each running in the direction of the angled retaining ends (235; 235'), in particular the retainer (240) having at least one latching receptacle (242) for fastening to the connector part (213).

16. Contact line (1; 101; 201) for supplying electrical energy to an electrical load which can be moved in a longitudinal direction (L) along the contact line (1; 101; 201), having at least one first and second conductor rail (4, 5) running in the longitudinal direction (L), the conductor rails (4, 5) having a contact section (6) running in the longitudinal direction (L), **characterized in that** an extensible connector (12; 112; 212) according to one of the preceding claims is provided for connecting the first conductor rail (4) and the second conductor rail (5).

17. Contact line (1; 101; 201) according to claim 16, **characterized in that** side walls (7, 7') which surround an inner space (10) adjoin the contact section (6), and/or **in that** the plug part (13; 113; 213) is inserted into the inner space (10) of the second conductor rail (5) and/or is electrically conductively connected to the second conductor rail (5), and/or **in that** the socket part (26; 126; 226) is inserted into the inner space (10) of the first conductor rail (4) and/or is electrically conductively connected to the first conductor rail (4).

18. Contact line (1; 101; 201) according to one of claims 16 to 17, **characterized in that** the first conductor rail (4) and the second conductor rail (5) have, on their side facing away from the contact section (6), a longitudinal slot (11) which runs in the longitudinal direction (L) and with which the securing opening (32) of the socket part (26) and/or the longitudinal recess (18) of the plug part (13) are aligned.

19. Contact line (1; 101; 201) according to claim 18, **characterized in that** the longitudinal slot (11), at least in the region of the securing element (33; 115, 115'; 233, 233') of the extensible connector (12), is completely or partially covered by a cover (36), in particular the cover (36) being formed by an electrically insulating insulation profile which surrounds the first conductor rail (4) and second conductor rail (5) at least in the region of the securing element (33; 115, 115'; 233, 233').

## Revendications

1. Raccord de dilatation (12 ; 112 ; 212) pour la connexion de deux barres omnibus (4, 5) successives dans une direction longitudinale (L) d'une ligne de contact (1), dans lequel le raccord de dilatation (12 ; 112 ; 212) présente une partie douille (26 ; 126 ; 226) avec une ouverture de connexion (31 ; 131) s'étendant dans la direction longitudinale (L) et une partie fiche (13 ; 113 ; 213) avec une fiche de connexion (21 ; 121 ; 221) s'étendant dans la direction longitudinale (L), dans lequel la fiche de connexion (21 ; 121 ; 221) peut être enfichée dans l'ouverture de connexion (31 ; 131) pour l'établissement d'une connexion électrique dans la direction longitudinale (L).

2. Raccord de dilatation (12) selon la revendication 1, **caractérisé en ce qu'**un contact électrique (23) de la fiche de connexion (21) est disposé dans la direction longitudinale (L) à une certaine distance d'une zone de connexion (14) de la partie fiche (13), qui est supérieure à la fente de dilatation maximale (D) prédéfinie entre la partie fiche (13) et la partie douille (26) dans la direction longitudinale (L).

3. Raccord de dilatation (12) selon l'une quelconque des revendications précédentes, **caractérisé en ce que** le raccord de dilatation (12) présente un élément de sécurité (33), lequel relie la partie douille (26) et la partie fiche (13) l'une à l'autre de façon mobile jusqu'à une fente de dilatation maximale (D) prédéfinie dans la direction longitudinale (L).

4. Raccord de dilatation (12) selon l'une quelconque des revendications précédentes, **caractérisé en ce qu'**un évidement longitudinal (18) s'étendant dans la direction longitudinale (L) est prévu sur la partie fiche (13), dans lequel au moins une butée coulissante (34) de l'élément de sécurité (33) s'insère dans l'évidement longitudinal (18), et/ou qu'un autre évidement longitudinal s'étendant dans la direction longitudinale (L) est prévu sur la partie douille (26), dans lequel une autre butée coulissante de l'élément de sécurité (33) s'insère dans l'autre évidement longitudinal.

5. Raccord de dilatation (12) selon la revendication 4, **caractérisé en ce que** la butée coulissante (34) pour la fente de dilatation maximale (D) prédéfinie entre la partie fiche (13) et la partie douille (26) vient en butée contre une partie de sécurité (19) avant de l'évidement longitudinal (18) tournée vers le point de connexion entre la partie douille (26) et la partie fiche (13), et/ou que le raccord de dilatation (12) prévoit au moins sur la face de l'élément de sécurité (33) un cache (36), lequel maintient la butée coulissante (34) dans l'évidement longitudinal (18).

6. Raccord de dilatation selon l'une quelconque des revendications précédentes, **caractérisé en ce qu'**un évidement longitudinal s'étendant dans la direction longitudinale (L), connecté à l'ouverture de connexion, dans lequel s'insère dans l'état monté une butée coulissante disposée sur la fiche de connexion, est prévu dans la partie douille.

7. Raccord de dilatation selon la revendication 6, **caractérisé en ce que** l'évidement longitudinal réalise une butée de sécurité avant plus proche de l'entrée de l'ouverture de connexion dans la direction longitudinale (L) pour la butée coulissante, et/ou l'évidement longitudinal est un trou oblong, qui passe entièrement à travers la partie douille vers l'extérieur à partir de l'ouverture de connexion transversalement par rapport à la direction longitudinale (L), et/ou que la butée coulissante peut être fixée sur une section de sécurité de la fiche de connexion.

8. Raccord de dilatation (112 ; 212) selon l'une quelconque des revendications précédentes, **caractérisé en ce que** le raccord de dilatation (112 ; 212) présente une autre partie douille (126' ; 226') avec une autre ouverture de connexion (131') s'étendant dans la direction longitudinale (L) et la partie fiche (113 ; 213) une autre fiche de connexion (121' ; 221') opposée à la fiche de connexion (121 ; 221) dans la direction longitudinale (L), dans lequel l'autre fiche de connexion (121' ; 221') peut être enfichée dans l'autre ouverture de connexion (131') dans la direction longitudinale (L) pour l'établissement d'une connexion électrique.

9. Raccord de dilatation (112 ; 212) selon la revendication 8, **caractérisé en ce que** la partie fiche (113 ; 213) présente une partie centrale (124) disposée entre les deux fiches de connexion (121, 121' ; 221, 221') avec des butées pour les extrémités frontales des parties douille (126, 126' ; 226, 226'), et/ou au moins une entretoise (122, 122' ; 222, 222') est disposée entre les contacts électriques (123, 123' ; 223, 223') des deux fiches de connexion (121 ; 121' ; 221, 221') de la partie fiche (113 ; 213).

10. Raccord de dilatation (112) selon l'une quelconque des revendications 8 à 9, **caractérisé en ce que** respectivement un évidement longitudinal (118 ; 118') connecté à l'ouverture de connexion (131 ; 131') respective, s'étendant dans la direction longitudinale (L), dans lequel s'insère dans l'état monté une butée coulissante (117 ; 117') disposée sur la fiche de connexion (121 ; 121') respective, est prévu dans les parties douille (126 ; 126'), en particulier dans lequel les évidements longitudinaux (118 ; 118') réalisent respectivement une butée de sécurité (119 ; 119') avant plus proche de l'entrée des ouvertures de connexion (131 ; 131') respectives dans la direction longitudinale (L) pour la butée coulissante (117 ; 117') respective.

11. Raccord de dilatation (112) selon la revendication 10, **caractérisé en ce que** les évidements longitudinaux (118 ; 118') sont des trous oblongs, qui passent entièrement à travers la partie douille (126 ; 126') vers l'extérieur à partir de l'ouverture de connexion (131 ; 131') respective transversalement par rapport à la direction longitudinale (L), et/ou dans lequel les butées coulissantes (117 ; 117') peuvent être fixées sur une section de sécurité (114 ; 114') de la fiche de connexion (121 ; 121') respective.

12. Raccord de dilatation (212) selon l'une quelconque des revendications 8 à 9, **caractérisé en ce que** respectivement un évidement longitudinal (218 ; 218') s'étendant dans la direction longitudinale (L), dans lequel s'insèrent des butées coulissantes (234, 234') au moins d'un élément de sécurité (233, 233') allongé, est prévu dans les parties douille (226 ; 226').

13. Raccord de dilatation (212) selon la revendication 12, **caractérisé en ce que** deux éléments de sécurité (233, 233') sont prévus, lesquels présentent respectivement une des butées coulissantes (234, 234'), et dans la direction longitudinale (L) plus près de la partie fiche (213) respectivement une extrémité de retenue (235, 235') pour la fixation sur la partie fiche (213) ou un élément de retenue (240) pouvant être fixé sur la partie fiche (213).

14. Raccord de dilatation (212) selon la revendication 13, **caractérisé en ce que** les butées coulissantes (234 ; 234') sont coudées par rapport à l'extrémité de retenue (235 ; 235') de l'élément de sécurité (233, 233') respectif transversalement par rapport à la direction longitudinale (L).

15. Raccord de dilatation (212) selon la revendication 14, **caractérisé en ce que** l'élément de retenue (240) présente pour la fixation des éléments de sécurité (233 ; 233') des rainures de retenue (243) s'étendant respectivement dans la direction longitudinale (L) pour une partie des éléments de sécurité (233 ; 233') s'étendant dans la direction longitudinale (L) et d'autres rainures de retenue (244) s'étendant respectivement en direction des extrémités de retenue (235 ; 235') coudées, en particulier dans lequel l'élément de retenue (240) présente au moins un logement d'encliquetage (242) pour la fixation sur la partie fiche (213) .

16. Ligne de contact (1 ; 101 ; 201) pour l'alimentation d'un consommateur électrique déplaçable dans une direction longitudinale (L) le long de la ligne de contact (1 ; 101 ; 201) en énergie électrique, avec au moins une première et deuxième barre omnibus (4, 5) s'étendant dans la direction longitudinale (L), dans laquelle les barres omnibus (4, 5) présentent une section de contact (6) s'étendant dans la direction longitudinale (L), **caractérisée en ce que** pour la connexion de la première barre omnibus (4) et de la deuxième barre omnibus (5) un raccord de dilatation (12 ; 112 ; 212) selon l'une quelconque des revendications précédentes est prévu.

17. Ligne de contact (1 ; 101 ; 201) selon la revendication 16, **caractérisé en ce que** des parois latérales (7, 7'), lesquelles entourent un espace intérieur (10), se raccordent à la section de contact (6), et/ou que la partie fiche (13 ; 113 ; 213) est enfichée dans l'espace intérieur (10) de la deuxième barre omnibus (5) et/ou est connectée de manière électro-conductrice à la deuxième barre omnibus (5), et/ou que la partie douille (26 ; 126 ; 226) est enfichée dans l'espace intérieur (10) de la première barre omnibus (4) et/ou connectée de manière électro-conductrice à la première barre omnibus (4).

18. Ligne de contact (1 ; 101 ; 201) selon l'une quelconque des revendications 16 à 17, **caractérisée en ce que** la première barre omnibus (4) et la deuxième barre omnibus (5) présentent sur leur face opposée à la section de contact (6) une fente longitudinale (11) s'étendant dans la direction longitudinale (L), vers laquelle l'ouverture de sécurité (32) de la partie douille (26) et/ou l'évidement longitudinal (18) de la partie fiche (13) sont orientés.

19. Ligne de contact (1 ; 101 ; 201) selon la revendication 18, **caractérisée en ce que** la fente longitudinale (11) est recouverte au moins dans la zone de l'élément de sécurité (33 ; 115, 115' ; 233, 233') du raccord de dilatation (12) entièrement ou en partie par un cache (36), en particulier dans laquelle le cache (36) est formé par un profilé d'isolation électro-isolant, lequel entoure la première barre omnibus (4) et deuxième barre omnibus (5) au moins dans la zone de l'élément de sécurité (33 ; 115, 115' ; 233, 233').
